# EUROPEAN PATENT APPLICATION

(11) **EP 4 773 164 A1**
(43) Date of publication of application: **08.07.2026**
(21) Application number: 24881995.5
(22) Date of filing: 19.08.2024
(51) Int. Cl.: H01G 4/30

(54) **MULTILAYER CERAMIC ELECTRONIC COMPONENT**

(30) Priority: 27.10.2023 JP 2023185054
(71) Applicant: Murata Manufacturing Co., Ltd., Nagaokakyo-shi, Kyoto 617-8555 (JP)
(72) Inventor: SHIOTA, Jun, Nagaokakyo-shi, Kyoto 617-8555 (JP); SHIMADA, Yasuyuki, Nagaokakyo-shi, Kyoto 617-8555 (JP)
(74) Representative: Stöckeler, Ferdinand
(86) International application number: PCT/JP2024/029270
(87) International publication number: WO 2025/088878

(57) **Abstract**

There is provided a multilayer ceramic electronic component such as a multilayer ceramic capacitor, which has high reliability. Multiple inner electrode layers of a multilayer ceramic electronic component (1) include a first inner electrode layer (6a) exposed from a first end surface (E1) and a second inner electrode layer (6b) exposed from a second end surface (E2). A multilayer body (2) includes an inner layer portion in which the first inner electrode layer (6a) is opposed to the second inner electrode layer (6b) in a lamination direction (T). A grain diameter of a ceramic contained on a first side surface (S1) side and a second side surface (S2) side of the multilayer body (2) is smaller than a grain diameter of the ceramic contained in a central portion in a width direction (W) of the multilayer body (2). A grain diameter of the ceramic contained in end portions on the first end surface (E1) side and the second end surface (E2) side of the inner layer portion is equal to or larger than a grain diameter of the ceramic contained in a central portion of the inner layer portion.

## Description

### Technical Field

The present invention relates to a multilayer ceramic electronic component.

### Background Art

A multilayer ceramic electronic component such as a multilayer ceramic capacitor is manufactured by laminating multiple dielectric sheets. Inner electrode layers for constituting a capacitor, a resistor, an inductor, a varistor, a filter, and the like are formed on the dielectric sheets depending on the multilayer ceramic electronic component. To achieve reduction in size and higher performance of the multilayer ceramic electronic component, the dielectric sheets have been made thin and multilayered. Patent Document 1 shows an example.

### Citation List

### Patent Document

Patent Document 1: Japanese Unexamined Patent Application Publication No. 2001-267173

### Summary of Invention

### Technical Problem

A difference in level is formed in an amount equivalent to a thickness of the inner electrode layers when the dielectric sheets and the inner electrode layers are alternately laminated and when the inner electrode layers are disposed and laminated such that end portions of the inner electrode layers are exposed in a staggered manner from both end surfaces in a longitudinal direction as shown in Patent Document 1.

When a multilayer body is pressed in a state of the difference in level equivalent to the thickness having been formed, the ceramic in the dielectric sheets located in the vicinity of the difference in level flows into the difference equivalent to the thickness so as to make up the difference. As a result, the thickness of the dielectric sheet in the vicinity of the difference is reduced. Accordingly, the thickness of the dielectric sheet which has been reduced by thin layering may further be reduced in some cases.

However, if the dielectric sheet thinned by thin layering is made even thinner, grain boundaries of the dielectric sheet will transition to a scarce state in terms of the thickness direction. Thus, electric resistance of the dielectric sheet becomes extremely low. As a consequence, when a voltage is applied to the thinned dielectric sheet, an electric current may flow excessively so as to cause electric field concentration, and there is a possibility to cause dielectric breakdown.

In addition, when the electric current flows through the inner electrode layer, an intensity of the electric field grows larger at an end portion of the inner electrode layer being located in the vicinity of the difference in level due to an edge effect as compared to other regions of the inner electrode layer. For this reason, the end portion of the inner electrode layer located in the vicinity of the difference in level has a higher possibility to cause the electric field concentration and to cause dielectric breakdown in some cases.

Accordingly, a problem of the present invention is to provide a multilayer ceramic electronic component such as a multilayer ceramic capacitor having high reliability, or more specifically, to provide a multilayer ceramic electronic component capable of suppressing the occurrence of dielectric breakdown at an end portion of an inner electrode layer that is exposed to a strong electric field. Solution to Problem

A multilayer ceramic electronic component according to the present invention includes: a multilayer body including a plurality of dielectric layers and a plurality of inner electrode layers being laminated, a first principal surface and a second principal surface opposed to each other in a lamination direction, a first end surface and a second end surface opposed to each other in a length direction intersecting the lamination direction, and a first side surface and a second side surface opposed to each other in a width direction intersecting the lamination direction and the length direction, the plurality of inner electrode layers include a first inner electrode layer exposed from the first end surface, and a second inner electrode layer exposed from the second end surface, the multilayer body includes an inner layer portion in which the first inner electrode layer is opposed to the second inner electrode layer in the lamination direction, a grain diameter of a ceramic contained in a first side surface side and a second side surface side of the multilayer body is smaller than a grain diameter of the ceramic contained in a central portion in the width direction of the multilayer body, and a grain diameter of the ceramic contained in end portions on a first end surface side and a second end surface side of the inner layer portion is equal to or larger than a grain diameter of the ceramic contained in a central portion of the inner layer portion.

### Advantageous Effects of Invention

According to the present invention, it is possible to provide a multilayer ceramic electronic component such as a multilayer ceramic capacitor, which has high reliability.

### Brief Description of Drawings

[Fig. 1] Fig. 1 is a perspective view showing a multilayer ceramic electronic component according to an embodiment of the present invention.
[Fig. 2] Fig. 2 is a sectional view taken along line I-I in Fig. 1.
[Fig. 3] Fig. 3 is a sectional view taken along line II-II in Fig. 1.
[Fig. 4] Fig. 4 is a sectional view taken along line III-III in Fig. 1.
[Fig. 5] Fig. 5 is a sectional view showing a multilayer ceramic electronic component according to a second embodiment of the present invention, which corresponds to the sectional view taken along line II-II in Fig. 1.
[Fig. 6] Fig. 6 is a diagram showing an outline of a multilayer body core portion.
[Fig. 7] Fig. 7 is an explanatory diagram showing a polished inner layer portion.
[Fig. 8] Fig. 8 is an explanatory diagram showing the polished inner layer portion.
[Fig. 9] Fig. 9 is a LW sectional view of a multilayer body showing ceramic grain diameter distribution.

### Description of Embodiments

### (First embodiment)

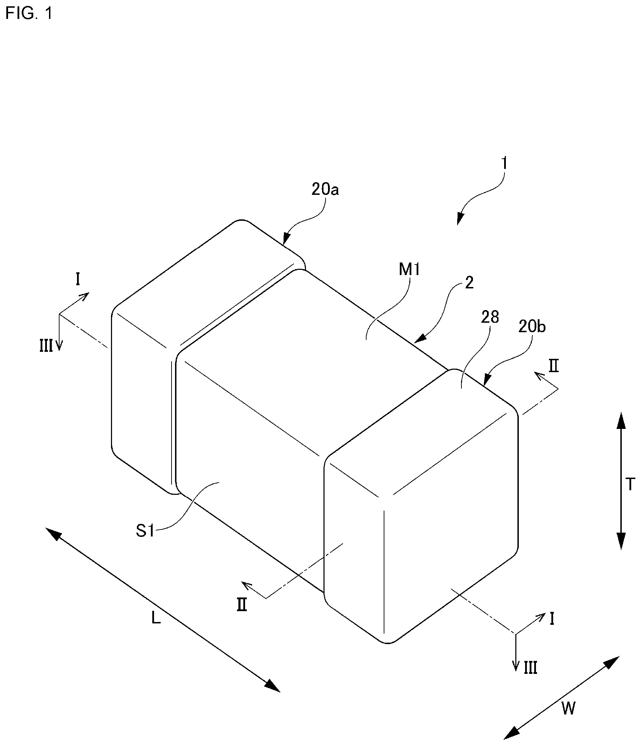

Embodiments of the invention will be described based on a multilayer ceramic capacitor 1 representing an example of a multilayer ceramic electronic component. Fig. 1 is a perspective view of the multilayer ceramic capacitor 1 of a first embodiment of the present invention.

### (Multilayer body)

A multilayer body 2 includes multiple dielectric layers and multiple inner electrode layers which are laminated. The multilayer body 2 has an appropriately rectangular parallelepiped shape. In the multilayer body 2, a direction in which the dielectric layers and the inner electrode layers are laminated will be referred to as a lamination direction T. Meanwhile, a direction orthogonal to the lamination direction T will be referred to as a width direction W. A direction orthogonal to the lamination direction T and the width direction W will be referred to as a length direction L.

In the multilayer body 2, two surfaces opposed to each other in the lamination direction T will be referred to as a first principal surface M1 and a second principal surface M2. Meanwhile, in the multilayer body 2, two surfaces opposed to each other in the width direction W will be referred to as a first side surface S1 and a second side surface S2. In the meantime, a first end surface E1 and a second end surface E2 are opposed to each other in the length direction L. The second principal surface M2 is a mounting surface of the multilayer ceramic capacitor 1. When the multilayer ceramic capacitor 1 is mounted on a wiring substrate or the like, the mounting surface is a surface that faces the wiring substrate.

In terms of cross-sections of the multilayer body 2, a cross-section taken along line I-I in Fig. 1 will be defined as an LT cross-section. A cross-section taken along line II-II in Fig. 1 will be defined as a WT cross-section. A cross-section taken along line III-III in Fig. 1 will be defined as an LW cross-section.

Corner portions and ridge portions of the multilayer body 2 are preferably rounded. A corner portion is a portion where three surfaces of the multilayer body 2 meet. A ridge portion is a portion where two surfaces of the multilayer body 2 meet. Meanwhile, asperities and the like may be formed at part or all of the principal surfaces, the side surfaces, and the end surfaces.

### (Dielectric layers)

A total number of the dielectric layers to be laminated in the multilayer body 2 is preferably equal to or above 15 layers and equal to or below 2000 layers. Each dielectric layer is mainly formed from a ceramic material. For example, a dielectric ceramic formed from a main component such as BaTiO₃, CaTiO₃, SrTiO₃, and CaZrO₃ can be used as this ceramic material. Meanwhile, a dielectric ceramic obtained by adding an accessory component such as a Mn compound, an Fe compound, a Cr compound, a Co compound, and a Ni compound to any of these main components may be used as the ceramic material.

Note that the present embodiment will describe the multilayer ceramic electronic component by using the multilayer ceramic capacitor 1 that represents one aspect of the multilayer ceramic electronic component as an example.

The multilayer ceramic electronic component functions as a ceramic piezoelectric element when a piezoelectric ceramic is used for the multilayer body 2. Specific examples of a piezoelectric ceramic material include a PZT (lead zirconate titanate)-based ceramic material and the like.

Meanwhile, the multilayer ceramic electronic component functions as a thermistor element when a semiconductor ceramic is used for the multilayer body 2. Specific examples of a semiconductor ceramic material include a spinel-based ceramic material and the like.

Meanwhile, the multilayer ceramic electronic component functions as an inductor element when a magnetic ceramic is used for the multilayer body 2. In the meantime, in the case where the multilayer ceramic electronic component functions as the inductor element, the inner electrode layer is formed into a coiled conductor. Specific examples of a magnetic ceramic material include a ferrite ceramic material and the like.

A thickness of each dielectric layer is preferably equal to or above 0.5 µm and equal to or below 10 µm.

### (Segmentation of multilayer body)

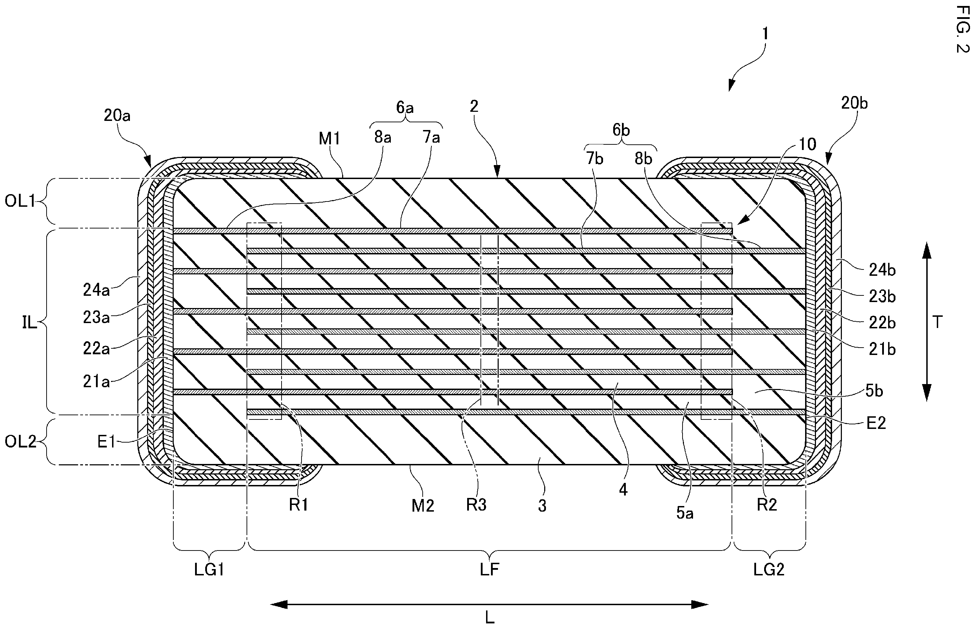

Segmentation in the length direction L of the multilayer body 2 will be described based on Fig. 2. Fig. 2 is a sectional view taken along line I-I in Fig. 1. The multilayer body 2 can be segmented in terms of the lamination direction T into a first principal surface side outer layer portion OL1, an inner layer range IL, and a second principal surface side outer layer portion OL2. The first principal surface side outer layer portion OL1, the inner layer range IL, and the second principal surface side outer layer portion OL2 are arranged in this order in the lamination direction T from the first principal surface M1 toward the second principal surface M2.

The first principal surface side outer layer portion OL1 is a portion between the first principal surface M1 and a line drawn from the first end surface E1 to the second end surface E2 along a surface of an inner electrode layer located closest to the first principal surface M1. The second principal surface side outer layer portion OL2 is a portion between the second principal surface M2 and a line drawn from the first end surface E1 to the second end surface E2 along a surface of an inner electrode layer located closest to the second principal surface M2. The inner layer range IL is a range sandwiched between the first principal surface side outer layer portion OL1 and the second principal surface side outer layer portion OL2. That is to say, the inner layer range IL is a range between the line drawn from the first end surface E1 to the second end surface E2 along the surface of the inner electrode layer located closest to the first principal surface M1 and the line drawn from the second end surface E2 toward the first end surface E1 along the surface of the inner electrode layer located closest to the second principal surface M2.

The first principal surface side outer layer portion OL1 is located on the first principal surface M1 side of the multilayer body 2. The first principal surface side outer layer portion OL1 can be defined as an aggregate of the multiple dielectric layers located between the first principal surface M1 and the line drawn from the first end surface E1 to the second end surface E2 along the outermost surface of the inner electrode layer located closest to the first principal surface M1.

The second principal surface side outer layer portion OL2 is located on the second principal surface M2 side of the multilayer body 2. The second principal surface side outer layer portion OL2 can be defined as an aggregate of the multiple dielectric layers located between the second principal surface M2 and the line drawn from the first end surface E1 to the second end surface E2 along the outermost surface of the inner electrode layer located closest to the second principal surface M2.

The first principal surface side outer layer portion OL1 is located on the first principal surface M1 side, and is formed from multiple dielectric layers located between the first principal surface M1 and the outermost surface on the first principal surface M1 side of the inner layer range IL as well as an extension of the outermost surface.

The second principal surface side outer layer portion OL2 is located on the second principal surface M2 side, and is formed from multiple dielectric layers located between the second principal surface M2 and the outermost surface on the second principal surface M2 side of the inner layer range IL as well as an extension of the outermost surface.

The inner layer range IL is the range sandwiched between the first principal surface side outer layer portion OL1 and the second principal surface side outer layer portion OL2.

Of the dielectric layers, dielectric layers disposed at the first principal surface side outer layer portion OL1 and the second principal surface side outer layer portion OL2 will be referred to as outer layer dielectric layers 3. Of the dielectric layers, dielectric layers disposed in the inner layer range IL will be referred to as inner layer dielectric layers 4.

Dimensions of the multilayer body 2 are not limited to particular dimensions. A dimension in the length direction L of the multilayer body 2 will be referred to as an L dimension. The L dimension is preferably equal to or above 0.2 mm and equal to or below 10 mm. A dimension in the width direction W of the multilayer body 2 will be referred to as a W dimension. The W dimension is preferably equal to or above 0.1 mm and equal to or below 5 mm. A dimension in the lamination direction T of the multilayer body 2 will be referred to as a T dimension. The T dimension is preferably equal to or above 0.1 mm and equal to or below 5 mm.

### (L gap)

Segmentation in the length direction L of the multilayer body 2 will be described. The multilayer body 2 can be segmented into a first end surface side outer layer portion LG1, an L opposition portion LF, and a second end surface side outer layer portion LG2, in the length direction L. The first end surface side outer layer portion LG1, the L opposition portion LF, and the second end surface side outer layer portion LG2 are arranged in this order in the length direction L from the first end surface E1 toward the second end surface E2.

The first end surface side outer layer portion LG1 is a portion where only first inner electrode layers 6a are opposed to one another in the lamination direction T, and is a portion located between the first principal surface side outer layer portion OL1 and the second principal surface side outer layer portion OL2. The second end surface side outer layer portion LG2 is a portion where only second inner electrode layers 6b are opposed to one another in the lamination direction T, and is a portion located between the first principal surface side outer layer portion OL1 and the second principal surface side outer layer portion OL2. The L opposition portion LF is a region sandwiched between the first end surface side outer layer portion LG1 and the second end surface side outer layer portion LG2. That is to say, the L opposition portion LF is a portion where first inner electrode layers 6a and the second inner electrode layers 6b are opposed to one another in the lamination direction T. The L opposition portion LF is a portion corresponding to opposite electrode portions of the inner electrode layers. The first end surface side outer layer portion LG1 and the second end surface side outer layer portion LG2 are portions corresponding to extended electrode portions of the inner electrode layers. The opposite electrode portions and the extended electrode portions will be described later. Meanwhile, the first end surface side outer layer portion LG1 and the second end surface side outer layer portion LG2 are also referred to as L gaps.

The first end surface side outer layer portion LG1 is located on the first end surface E1 side, and is located between the outermost surface on the first end surface E1 side and the end portion outermost surface of the second inner electrode layer 6b which is not connected to a first outer electrode 20a.

The second end surface side outer layer portion LG2 is located on the second end surface E2 side, and is located between the outermost surface on the second end surface E2 side and the end portion outermost surface of the first inner electrode layer 6a which is not connected to a second outer electrode 20b.

### (W gap)

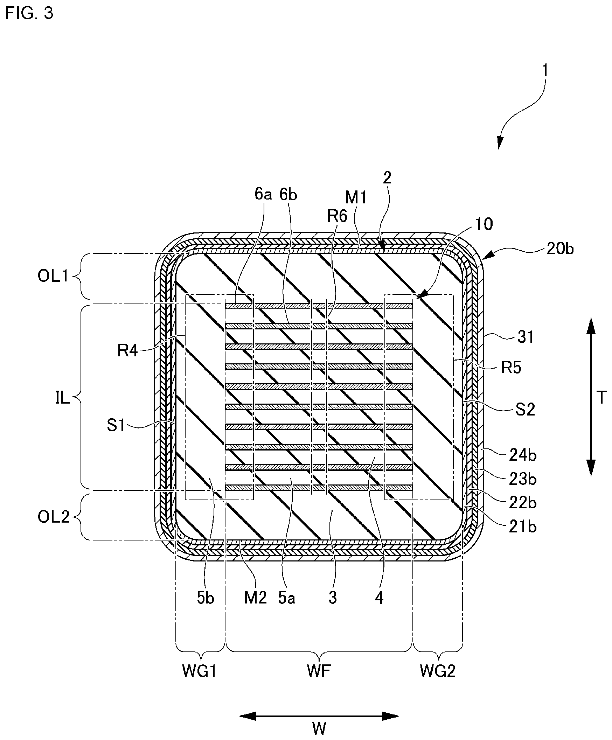

Segmentation in the width direction W of the multilayer body 2 will be described based on Fig. 3. Fig. 3 is a sectional view taken along line II-II in Fig. 1. The multilayer body 2 can be segmented in terms of the lamination direction T into the first principal surface side outer layer portion OL1, the inner layer range IL, and the second principal surface side outer layer portion OL2. The first principal surface side outer layer portion OL1 is a portion between the first principal surface M1 and a line drawn from the first side surface S1 to the second side surface S2 along the outermost surface of the inner electrode layer located closest to the first principal surface M1. The second principal surface side outer layer portion OL2 is a portion between the second principal surface M2 and a line drawn from the first side surface S1 to the second side surface S2 along the outermost surface of the inner electrode layer located closest to the second principal surface M2. A range of the inner layer range IL is a range sandwiched between the first principal surface side outer layer portion OL1 and the second principal surface side outer layer portion OL2. That is to say, the inner layer range IL is a range between the line drawn from the first side surface S1 to the second side surface S2 along the outermost surface of the inner electrode layer located closest to the first principal surface M1 and the line drawn from the second side surface S2 to the first side surface S1 along the outermost surface of the inner electrode layer located closest to the second principal surface M2. Of the dielectric layers, the dielectric layers disposed at the first principal surface side outer layer portion OL1 and the second principal surface side outer layer portion OL2 will be defined as the outer layer dielectric layers 3. Of the dielectric layers, dielectric layers disposed in the inner layer range IL will be referred to as the inner layer dielectric layers 4.90

The multilayer body 2 can be segmented into a first side surface side outer layer portion WG1, a W opposition portion WF, and a second side surface side outer layer portion WG2, in the width direction W. The first side surface side outer layer portion WG1, the W opposition portion WF, and the second side surface side outer layer portion WG2 are arranged in this order in the width direction W from the first side surface S1 toward the second side surface S2.

The W opposition portion WF is a portion where the inner electrode layers are opposed to one another in the lamination direction T. The first side surface side outer layer portion WG1 is a portion between the W opposition portion WF and the first side surface S1 as well as between the first principal surface side outer layer portion OL1 and the second principal surface side outer layer portion OL2. The second side surface side outer layer portion WG2 is a portion between the W opposition portion WF and the second side surface S2 as well as between the first principal surface side outer layer portion OL1 and the second principal surface side outer layer portion OL2. The first side surface side outer layer portion WG1 and the second side surface side outer layer portion WG2 are also referred to as W gaps.

The first side surface side outer layer portion WG1 and the second side surface side outer layer portion WG2 are portions where the inner electrode layers are not present in the lamination direction T. The first side surface side outer layer portion WG1 is the portion located on the first side surface S1 side in which the inner electrodes are not present in the lamination direction T, and which is sandwiched between the first principal surface side outer layer portion OL1 and the second principal surface side outer layer portion OL2. That is to say, the first side surface side outer layer portion WG1 can be formed from the multiple dielectric layers which are located on the first side surface S1 side and are located in a space in the first side surface S1, the first principal surface side outer layer portion OL1, the second principal surface side outer layer portion OL2, and the outermost surface on an inner layer portion on the first side surface S1 side.

Likewise, the second side surface side outer layer portion WG2 is the portion located on the second side surface S2 side in which the inner electrodes are not present in the lamination direction T, and which is sandwiched between the first principal surface side outer layer portion OL1 and the second principal surface side outer layer portion OL2. That is to say, the second side surface side outer layer portion WG2 can be formed from the multiple dielectric layers which are located on the second side surface S2 side and are located in a space in the second side surface S2, the first principal surface side outer layer portion OL1, the second principal surface side outer layer portion OL2, and the outermost surface on the inner layer portion on the second side surface S2 side.

### (Inner electrode layers)

The inner electrode layers include the multiple first inner electrode layers 6a and the multiple second inner electrode layers 6b. Each first inner electrode layer 6a is an inner electrode layer exposed to the first end surface E1. Each second inner electrode layer 6b is an inner electrode layer exposed to the second end surface E2.

The first inner electrode layer 6a includes a first opposite electrode portion 7a opposed to the second inner electrode layer 6b, and a first extended electrode portion 8a extended from the first opposite electrode portion 7a to the first end surface E1 of the multilayer body 2. An end portion on the first end surface E1 side of the first extended electrode portion 8a is extended to a surface of the first end surface E1 of the multilayer body 2. The end portion of the first extended electrode portion 8a extended to the first end surface E1 forms an exposed portion at the first end surface E1.

The second inner electrode layer 6b includes a second opposite electrode portion 7b opposed to the first inner electrode layer 6a, and a second extended electrode portion 8b extended from the second opposite electrode portion 7b to the second end surface E2 of the multilayer body 2. An end portion on the second end surface E2 side of the second extended electrode portion 8b is extended to a surface of the second end surface E2 of the multilayer body 2. The end portion of the second extended electrode portion 8b extended to the second end surface E2 forms an exposed portion at the second end surface E2.

Shapes of the first opposite electrode portion 7a and the second opposite electrode portion 7b are preferably rectangular shapes. However, the shapes of the first opposite electrode portion 7a and the second opposite electrode portion 7b are not limited to particular shapes. Nonetheless, corner portions of the first opposite electrode portion 7a and the second opposite electrode portion 7b may be rounded. Meanwhile, the corner portions of the first opposite electrode portion 7a and the second opposite electrode portion 7b may be formed aslant. Forming aslant means forming into a tapered shape.

In the first embodiment, shapes of the first extended electrode portion 8a and the second extended electrode portion 8b are preferably rectangular shapes, but are not limited to particular shapes in this example. Although the shapes of the first extended electrode portion 8a and the second extended electrode portion 8b are preferably rectangular shapes, corner portions of the first extended electrode portion 8a and the second extended electrode portion 8b may be rounded. Meanwhile, the corner portions of the first extended electrode portion 8a and the second extended electrode portion 8b may be formed aslant. Forming aslant means forming into a tapered shape.

A width of the first opposite electrode portion 7a and a width of the first extended electrode portion 8a may be formed into the same width. Alternatively, one of the width of the first opposite electrode portion 7a and the width of the first extended electrode portion 8a may be formed narrower than the other.

Likewise, a width of the second opposite electrode portion 7b and a width of the second extended electrode portion 8b may be formed into the same width. Alternatively, one of the width of the second opposite electrode portion 7b and the width of the second extended electrode portion 8b may be formed narrower than the other.

The first inner electrode layer 6a and the second inner electrode layer 6b can be formed from, for example, an appropriate conductive material of a metal such as Ni, Cu, Ag, Pd, and Au, an alloy containing at least one of those metals such as Ag-Pd alloy, and the like.

In the multilayer ceramic capacitor 1 of the present embodiment, a capacitance is formed by causing the first opposite electrode portion 7a and the second opposite electrode portion 7b to be opposed to each other through the intermediary of the inner layer dielectric layer 4. Accordingly, the multilayer ceramic capacitor 1 develops characteristics of a capacitor.

A thickness of each of the first inner electrode layer 6a and the second inner electrode layer 6b is preferably about equal to or above 0.2 µm and about equal to or below 2.0 µm, for example. Meanwhile, a total number of the first inner electrode layers 6a and the second inner electrode layers 6b is preferably equal to or above 15 layers and equal to or below 2000 layers.

### (Reduction in difference in level near end surfaces)

The multilayer ceramic capacitor 1 of the present embodiment is provided with a second dielectric layer 5b. The second dielectric layer 5b is disposed in order to equalize a length in the lamination direction T of the multilayer body 2.

Level difference layers will be described with reference to Fig. 2. In terms of the length in the lamination direction T of the multilayer body 2, a difference in length between the L opposition portion LF and the first end surface side outer layer portion LG1 as well as the second end surface side outer layer portion LG2 is preferably small. However, in the inner layer range IL, the inner layer dielectric layer 4 is disposed between the first inner electrode layer 6a and the second inner electrode layer 6b at the L opposition portion LF whereas there are locations in the first end surface side outer layer portion LG1 and the second end surface side outer layer portion LG2 where the inner layer dielectric layer 4, the first inner electrode layer 6a, and the second inner electrode layer 6b are not disposed. Accordingly, the multilayer body after undergoing a post-lamination pressing process is more likely to have different lengths in the lamination direction T between the L opposition portion LF and the first end surface side outer layer portion LG1 as well as the second end surface side outer layer portion LG2.

In the inner layer range IL, the inner layer dielectric layers 4, the first inner electrode layers 6a, and the second inner electrode layers 6b are laminated at the L opposition portion LF.

On the other hand, only the inner layer dielectric layers 4 and the first inner electrode layers 6a are laminated at the first end surface side outer layer portion LG1. No second inner electrode layers 6b are laminated at the first end surface side outer layer portion LG1.

Meanwhile, only the inner layer dielectric layers 4 and the second inner electrode layers 6b are laminated at the second end surface side outer layer portion LG2. No first inner electrode layers 6a are laminated at the second end surface side outer layer portion LG2.

For this reason, the multilayer body after undergoing the post-lamination pressing process is more likely to have different lengths in the lamination direction T between the L opposition portion LF and the first end surface side outer layer portion LG1 as well as the second end surface side outer layer portion LG2.

Accordingly, additional inner layer dielectric layers 4 are disposed at the first end surface side outer layer portion LG1 and the second end surface side outer layer portion LG2 in order to reduce the differences in length in the lamination direction T between the L opposition portion LF and the first end surface side outer layer portion LG1 as well as the second end surface side outer layer portion LG2. These additional inner layer dielectric layers 4 will be referred to as the second dielectric layers 5b. In contrast, the dielectric layers other than the second dielectric layers 5b included in the multilayer body 2 will be referred to as first dielectric layers 5a.

A second dielectric layer 5b is disposed between an end portion on the first end surface E1 side of the L opposition portion LF and an end portion on the first end surface E1 side of the first end surface side outer layer portion LG1. Moreover, another second dielectric layer 5b is disposed between an end portion on the second end surface E2 side of the L opposition portion LF and an end portion on the second end surface E2 side of the second end surface side outer layer portion LG2.

The second dielectric layers 5b preferably include the same principal component as that of the first dielectric layers 5a. However, the component of the second dielectric layers 5b is not limited thereto.

### (Reduction in difference in level near side surfaces)

In the multilayer ceramic capacitor 1 of the present embodiment, the second dielectric layers 5b are also provided to the side surfaces. A description will be given based on Fig. 3. The lengths in the lamination direction T of the multilayer body 2 are preferably equalized not only in the length direction L but also in the width direction W. However, in the inner layer range IL, the lengths in the lamination direction T are more likely to be different between the W opposition portion WF and the first side surface side outer layer portion WG1 as well as the second side surface side outer layer portion WG2 in the width direction W as with the length direction L.

In the inner layer range IL, the inner layer dielectric layers 4, the first inner electrode layers 6a, and the second inner electrode layers 6b are laminated at the W opposition portion WF.

On the other hand, the first inner electrode layers 6a and the second inner electrode layers 6b are not laminated at the first side surface side outer layer portion WG1 and the second side surface side outer layer portion WG2. Only the inner layer dielectric layers 4 are laminated at the first side surface side outer layer portion WG1 and the second side surface side outer layer portion WG2.

For this reason, the lengths in the lamination direction T are more likely to be different between the W opposition portion WF and the first side surface side outer layer portion WG1 as well as the second side surface side outer layer portion WG2.

Accordingly, additional inner layer dielectric layers 4 are disposed at the first side surface side outer layer portion WG1 and the second side surface side outer layer portion WG2 in order to reduce the differences in length in the lamination direction T between the W opposition portion WF and the first side surface side outer layer portion WG1 as well as the second side surface side outer layer portion WG2. These additional inner layer dielectric layers 4 are the second dielectric layers 5b.

A second dielectric layer 5b is disposed between an end portion on the first side surface S1 side of the first side surface side outer layer portion WG1 and an end portion of the first side surface S1 of the W opposition portion WF. Moreover, another second dielectric layer 5b is disposed between an end portion on the second side surface S2 side of the first side surface side outer layer portion WG1 and an end portion of the second side surface S2 of the W opposition portion WF.

The multilayer ceramic capacitor 1 of the present embodiment is characterized by a concentration of an additive agent and a ceramic grain diameter in the multilayer body 2.

### (Inner layer portion)

A portion where the first inner electrode layers 6a are opposed to the second inner electrode layers 6b will be referred to as an inner layer portion 10. The inner layer portion 10 is a portion where the L opposition portion LF shown in Fig. 2 and the W opposition portion WF shown in Fig. 3 intersect the inner layer range IL. The inner layer portion 10 has a broadly rectangular parallelepiped shape. The portion where the L opposition portion LF intersects the inner layer range IL is indicated as the inner layer portion 10 in Fig. 2. Meanwhile, the portion where the W opposition portion WF intersects the inner layer range IL is indicated as the inner layer portion 10 in Fig. 3.

### (Concentration of additive agent (LT cross-section))

In the LT cross-section shown in Fig. 2, an end portion on the first end surface E1 side of the inner layer portion 10 will be referred to as a region R1. An end portion on the second end surface E2 side of the inner layer portion 10 will be referred to as a region R2. A central portion in the length direction L of the inner layer portion 10 will be referred to as a region R3.

A concentration of an additive agent in the region R1 and a concentration of an additive agent in the region R2 are equal to or lower than a concentration of an additive agent in the region R3.

### (Concentration of additive agent (WT cross-section))

The WT cross-section is different from the above-described LT cross-section. In the WT cross-section shown in Fig. 3, an end portion on the first side surface S1 side of the inner layer portion 10 will be referred to as a region, and a region including the dielectric layer at an outer layer portion in the vicinity thereof will be referred to as R4. An end portion on the second side surface S2 side of the inner layer portion 10 will be referred to as a region, and a region including the dielectric layer at an outer layer portion in the vicinity thereof will be referred to as R5. A central portion in the width direction W of the inner layer portion 10 will be referred to as a region R6.

A concentration of an additive agent in the region R4 and a concentration of an additive agent in the region R5 are equal to or higher than a concentration of an additive agent in the region R6.

### (Example of additive agent (Ni))

An example of the additive agent is Ni. Reliability of the multilayer ceramic capacitor 1 can be improved by setting the Ni concentration of the additive agent on the side surface side of the inner layer portion 10 higher than that at the central portion of the inner layer portion 10. Specifically, in the case where the Ni concentration of the additive agent is high on the side surface side of the inner layer portion 10, it is possible to keep the ceramic grain diameters small on the side surface side of the inner layer portion 10, and to increase the number of ceramic grains in the dielectric layer in a firing process. Accordingly, an application voltage per grain boundary can be reduced by increasing the number of the ceramic grains in the dielectric layer, and dielectric degradation and dielectric breakdown on the side surface side of the inner layer portion 10 which is prone to electric field concentration can therefore be suppressed.

### (Example of additive agent (V))

Another example of the additive agent is V (vanadium). Reliability of the multilayer ceramic capacitor 1 can be improved by setting the V concentration of the additive agent on the side surface side of the inner layer portion 10 higher than that at the central portion of the inner layer portion 10. Specifically, in the case where the V concentration of the additive agent is high on the side surface side of the inner layer portion 10, solid dissolution of V proceeds to a grain boundary and a shell portion in the dielectric layer when the ceramic at this portion having the high concentration is sintered. Accordingly, resistance values at the grain boundary and the shell are reduced so that the electric field concentration on the grain boundary and the shell portion can be suppressed at the time of application of the voltage. That is to say, suppression of the electric field concentration makes electrons less likely to migrate on the side surface side of the dielectric layer during the voltage application, so that dielectric degradation or dielectric breakdown can be suppressed.

### (Example of additive agent (Sn))

Another example of the additive agent is Sn. Reliability of the multilayer ceramic capacitor 1 can be improved by setting the Sn concentration of the additive agent on the side surface side of the inner layer portion 10 higher than that at the central portion of the inner layer portion 10. Specifically, in the case where the Sn concentration of the additive agent is high on the side surface side of the inner layer portion 10, pressure resistance is improved by this Sn. In the case where the concentration of Sn is set high, Sn is more likely to be segregated on a surface at the end portion of the inner electrode layer. Due to segregation of Sn on the surface at the end portion, a depletion layer (an area where electrons do not exist) to be generated between the dielectric layer and the inner electrode is made larger (increased). When the depletion layer is made larger, energy required for passage of the electrons inside the depletion layer is increased. That is to say, the electric field concentration can be suppressed since it is harder for the electrons to migrate inside the depletion layer. This is because dielectric degradation and dielectric breakdown can be suppressed on the side surface side of the inner layer portion 10 which is prone to electric field concentration since the electric field concentration can be suppressed. In this way, it is possible to suppress dielectric degradation and dielectric breakdown on the side surface side of the inner layer portion 10 which is prone to electric field concentration.

### (V and Sn, and ceramic grain diameter)

Meanwhile, regarding V and Sn as well, in the case where the concentration of V or Sn in the additive agent is high on the side surface side of the inner layer portion 10, it is possible to keep the ceramic grain diameter small on the side surface side of the inner layer portion 10, and to increase the number of ceramic grains in the dielectric layer in the firing process as with Ni. Accordingly, the application voltage per grain boundary can be reduced by increasing the number of the ceramic grains in the dielectric layer, and dielectric degradation and dielectric breakdown on the side surface side of the inner layer portion 10 which is prone to electric field concentration can therefore be suppressed.

Here, the type of the additive agent is not limited to Ni, V, and Sn. Examples of the additive agent other than Ni, V, and Sn include Mn and Mg.

Reliability of the above-described multilayer ceramic capacitor 1 is related to the ceramic grain diameters of the dielectric layers. The ceramic grain diameters will be described below.

### (Ceramic grain diameters)

On the LT cross-section shown in Fig. 2, the ceramic grain diameter in the region R1 and the ceramic grain diameter in the region R2 are equal to or larger than the ceramic grain diameter in the region R3.

Likewise, on the WT cross-section shown in Fig. 3, the ceramic grain diameter in the region R4 and the ceramic grain diameter in the region R5 are equal to or smaller than the ceramic grain diameter in the region R6.

### (Side surface side of inner layer portion)

The following effects are obtained by setting the ceramic grain diameter on the side surface side of the inner layer portion 10 smaller than the ceramic grain diameter at the central portion of the inner layer portion 10. That is to say, it is possible to increase the number of the ceramic grains on the side surface side of the inner layer portion 10 by reducing the ceramic grain diameter. In this way, it is possible to reduce the application voltage per grain boundary of the ceramic grains. As a consequence, it is possible to suppress dielectric degradation and dielectric breakdown on the side surface side of the inner layer portion 10 which is prone to electric field concentration.

The aspect that the ceramic grain diameter on the side surface side of the inner layer portion 10 is smaller than the ceramic grain diameter at the central portion of the inner layer portion 10 is attributed to the aspect that the concentration of the additive agent on the side surface side of the inner layer portion 10 is higher than the concentration of the additive agent at the central portion of the inner layer portion 10.

As described above, in the present embodiment, the additive agent is Ni, V, or Sn (hereinafter referred to as Ni or the like). The following effects are obtained by causing the first dielectric layer 5a on the side surface side of the inner layer portion 10 to contain Ni or the like. That is to say, the ceramic grain diameter on the side surface side of the inner layer portion 10 can be kept small by containing Ni or the like. For this reason, it is possible to increase the number of the ceramic grains in the first dielectric layer 5a on the side surface side of the inner layer portion 10. Moreover, the application voltage per grain boundary can be reduced by increasing the number of the ceramic grains in the first dielectric layer 5a on the side surface side of the inner layer portion 10. As a consequence, it is possible to suppress the occurrence of dielectric degradation and dielectric breakdown of the first dielectric layer 5a on the side surface side of the inner layer portion 10 which is prone to electric field concentration.

### (Example of concentration of additive agent)

Here, regarding the additive agent of Ni or the like, the concentration of the additive agent contained in the region R4 and the region R5 of the inner layer portion 10 on the WT cross-section shown in Fig. 3 has a ratio equal to or above 100.1 mol% and equal to or below 103.0 mol% relative to the concentration of the additive agent contained in the region R6 of the inner layer portion 10. If the ratio of the concentration is below 100.1 mol%, it is not possible to make the ceramic grain diameter in the dielectric layer smaller or to reduce the application voltage per grain boundary. Accordingly, the occurrence of dielectric breakdown cannot be suppressed and reliability is not improved. On the other hand, if the ratio of the concentration exceeds 103.0 mol%, acceptors become excessive and oxygen vacancy is excessively generated in the dielectric layer, thus accelerating degradation of electric field intensity and causing dielectric breakdown. Hence, reliability is not improved.

The grain diameter of the ceramic contained in the region R4 and the region R5 of the inner layer portion 10 is smaller than the grain diameter of the ceramic contained in the region R6 of the inner layer portion 10 by a percentage equal to or above 10% and equal to or below 40%. If the percentage of reduction of the grain diameter is below 10%, an effect of improving reliability is not obtained from the act of reducing the ceramic grain diameter. If the percentage of reduction of the grain diameter exceeds 40%, the grains become small and a value εr is reduced. Accordingly, a desired capacitance is not obtained.

### (End surface side of inner layer portion)

The following effects are obtained by setting the ceramic grain diameter on the end surface side of the inner layer portion 10 equal to or larger than the ceramic grain diameter at the central portion of the inner layer portion 10. That is to say, it is possible to suppress the increase in the number of the ceramic grains on the end surface side of the inner layer portion 10 by increasing the ceramic grain diameter. In this way, it is possible to expand an acquired capacitance on the end surface side.

The aspect that the ceramic grain diameter on the end surface side of the inner layer portion 10 is equal to or larger than the ceramic grain diameter at the central portion of the inner layer portion 10 is attributed to the aspect that the concentration of the additive agent on the end surface side of the inner layer portion 10 is equal to or lower than the concentration of the additive agent at the central portion of the inner layer portion 10.

### (Example of concentration of additive agent)

Regarding the additive agent of Ni or the like, the concentration of the additive agent contained in the region R1 and the region R2 of the inner layer portion 10 on the LT cross-section shown in Fig. 2 has a ratio equal to or below 100 mol% and equal to or above 97.0 mol% relative to the concentration of the additive agent contained in the region R3 of the inner layer portion 10. If the ratio of the concentration exceeds 100 mol%, it is not possible to make the ceramic grain diameter in the dielectric layer larger. The small ceramic grain diameter may cause a problem that the acquired capacitance declines due to a failure to increase permittivity of the ceramics. On the other hand, if the ratio of the concentration falls below 97.0 mol%, the ceramic grain diameter in the dielectric layer becomes too large. The large ceramic grain diameter may cause a problem of deterioration in insulation properties due to a decrease in the number of grain boundaries in the element, thus leading to a failure in improvement of reliability.

### (Example of grain diameter)

The grain diameter of the ceramic contained in the region R1 and the region R2 of the inner layer portion 10 is preferably larger than the grain diameter of the ceramic contained in the region R3 of the inner layer portion 10 by a percentage equal to or above 0% and equal to or below 40%.

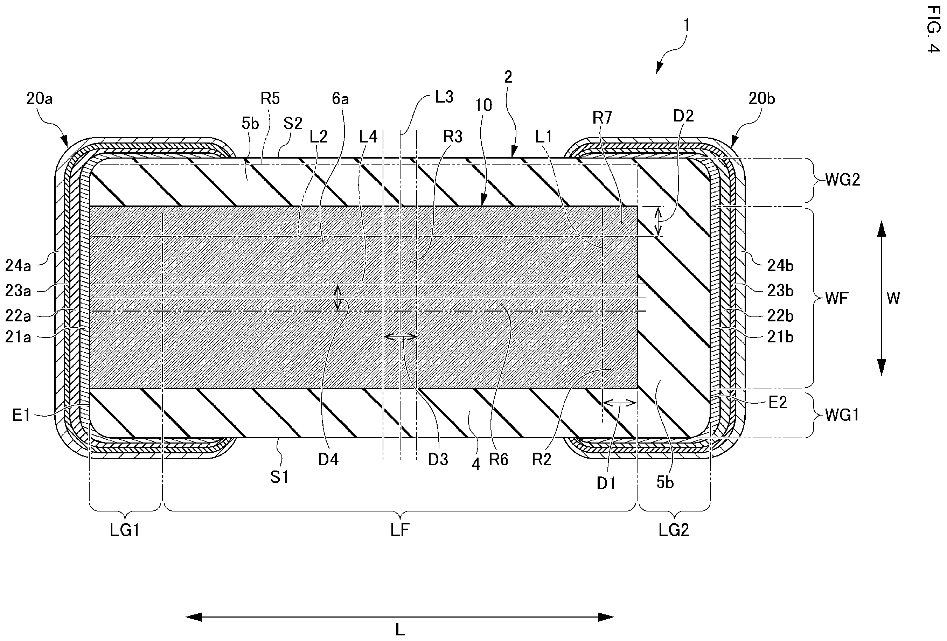

Fig. 4 is a diagram showing a cross-section taken along line III-III in Fig. 1. Fig. 4 shows the LW cross-section of the multilayer ceramic capacitor 1. Ceramic grain diameter distribution on the LW cross-section of the multilayer ceramic capacitor 1 will be described.

### (Region R2)

A line L1 shown in Fig. 4 is a line that indicates a position at 80 µm away in a direction of the first end surface E1 from the end portion on the second end surface E2 side of the inner layer portion 10. That is to say, a distance D1 shown in Fig. 4 is equal to 80 µm. In the inner layer portion 10, a region between the end portion on the second end surface E2 side of the inner layer portion 10 and the line L1 is the region R2. Here, the end portion on the second end surface E2 side of the inner layer portion 10 forms an interface between the inner layer portion 10 and the second dielectric layer 5b.

### (Region R5)

A line L2 shown in Fig. 4 is a line that indicates a position at 80 µm away in a direction of the first side surface S1 from the end portion on the second side surface S2 side of the inner layer portion 10. That is to say, a distance D2 shown in Fig. 4 is equal to 80 µm. In the inner layer portion 10, a region between the end portion on the second side surface S2 side of the inner layer portion 10 and the line L2 and including the dielectric layer of the outer layer portion in the vicinity thereof is the region R5. Here, the end portion on the second side surface S2 side of the inner layer portion 10 forms an interface between the inner layer portion 10 and the second dielectric layer 5b.

### (Region R1 and region R4)

The regions at the end portions of the inner layer portion 10 have been described above in terms of the region R2 and the region R5. The same applies to the region R1 and the region R4 as well. The region R1 is a region from the end portion on the first end surface E1 side of the inner layer portion 10 to a line indicating a position at 80 µm in the direction of the second end surface E2. Meanwhile, the region R4 is a region from the end portion on the first side surface S1 side of the inner layer portion 10 to a line indicating a position at 80 µm in the direction of the second side surface S2 inclusive of the dielectric layer of the outer layer portion in the vicinity thereof.

A line L3 shown in Fig. 4 is a center line in the length direction L of the inner layer portion 10. A line L4 is a center line in the width direction W of the inner layer portion 10.

### (Region R3)

In the inner layer portion 10, a range at a length of 80 µm in the length direction L with respect to the line L3 as the center is the region R3. A distance D3 shown in Fig. 4 is equal to 80 µm.

### (Region R6)

Meanwhile, in the inner layer portion 10, a range at a length of 80 µm in the width direction W with respect to the line L4 as the center is the region R6. A distance D4 shown in Fig. 4 is equal to 80 µm.

As described above, in the length direction L, the concentration of the additive agent in the region R2 is equal to or lower than the concentration of the additive agent in the region R3. Meanwhile, the ceramic grain diameter in the region R2 is equal to or larger than the ceramic grain diameter in the region R3. On the other hand, in the width direction W, the concentration of the additive agent in the region R5 is higher than the concentration of the additive agent in the region R6. Meanwhile, the ceramic grain diameter in the region R5 is smaller than the ceramic grain diameter in the region R6.

Here, a region where the region R2 overlaps the region R5 will be referred to as a region R7. The ceramic grain diameter in the region R7 is smaller than the ceramic grain diameter in the region R2. In the region R7, a larger number of the ceramic grains in the dielectric layer are present as compared to the region R2, so that a large number of the grain boundaries can be formed therein. Since the number of the ceramic grains in the dielectric layer is increased, it is possible to reduce the application voltage per grain boundary, and thus to suppress dielectric degradation and dielectric breakdown at an intersecting point of the end portions on the end surface side and on the side surface side of the inner layer portion 10 which is prone to electric field concentration.

Several end portions of the inner layer portion 10 have been described above as examples. The same applies to other end portions of the inner layer portion 10. The ceramic grain diameters and the like will be described further in detail later.

### (Outer electrodes)

Next, the outer electrodes will be described. The outer electrodes include the first outer electrode 20a and the second outer electrode 20b. The first outer electrode 20a is connected to the first inner electrode layer 6a. The first outer electrode 20a is also disposed from above the first end surface E1 to a portion of the first principal surface M1, a portion of the second principal surface M2, a portion of the first side surface S1, and a portion of the second side surface S2.

The second outer electrode 20b is connected to the second inner electrode layer 6b. The second outer electrode 20b is also disposed from above the second end surface E2 to a portion of the first principal surface M1, a portion of the second principal surface M2, a portion of the first side surface S1, and a portion of the second side surface S2.

The first outer electrode 20a and the second outer electrode 20b preferably include base electrode layers and plated layers. Meanwhile, a base electrode layer can include at least one selected from a baked layer, a conductive resin layer, a thin film layer, and the like. In the meantime, the conductive resin layer may be provided separately from the base electrode layer. In the following description, a configuration including the baked layer as the base electrode layer, and further including the conductive resin layer separately from the base electrode layer will be explained as an example.

The first outer electrode 20a includes a first base electrode layer 21a, a first conductive resin layer 22a, a first lower plated layer 23a, and a first upper plated layer 24a. Meanwhile, the second outer electrode 20b includes a second base electrode layer 21b, a second conductive resin layer 22b, a second lower plated layer 23b, and a second upper plated layer 24b.

The first base electrode layer 21a and the second base electrode layer 21b are layers containing a conductive metal and a glass component. The first conductive resin layer 22a and the second conductive resin layer 22b are layers formed from a thermosetting resin without containing a metal component. The first lower plated layer 23a and the second lower plated layer 23b can be formed from Ni-plated layers, for example. The first upper plated layer 24a and the second upper plated layer 24b can be formed from Sn-plated layers, for example. The respective layers will be sequentially described below.

### (Base electrode layers)

The base electrode layers include the first base electrode layer 21a and the second base electrode layer 21b. The first base electrode layer 21a is disposed from the first end surface E1 to the portion of the first principal surface M1, the portion of the second principal surface M2, the portion of the first side surface S1, and the portion of the second side surface S2. The second base electrode layer 21b is disposed from the second end surface E2 to the portion of the first principal surface M1, the portion of the second principal surface M2, the portion of the first side surface S1, and the portion of the second side surface S2.

The first base electrode layer 21a and the second base electrode layer 21b contain the conductive metal and the glass component. At least one selected from Cu, Ni, Ag, Pd, Ag-Pd alloy, Au, and the like is included as the conductive metal, for example. At least one selected from B, Si, Ba, Mg, Al, Li, and the like is included as the glass component.

Each of the first base electrode layer 21a and the second base electrode layer 21b may be formed from multiple layers. Meanwhile, the first base electrode layer 21a and the second base electrode layer 21b may be formed by applying and baking conductive paste containing the glass component and the metal onto the multilayer body. In the meantime, this baking may be carried out simultaneously with firing of the inner electrode layers or may be carried out after firing the inner electrode layers. In the case where the baking is carried out simultaneously with the firing of the inner electrode layers and the dielectric layers, it is preferable to form the base electrode layers by baking while adding a dielectric material instead of the glass component. As described above, the first base electrode layer 21a and the second base electrode layer 21b are constructed as the baked layers.

A thickness of the first base electrode layer 21a at the central portion in the lamination direction T of the first base electrode layer 21a located at the first end surface E1 is preferably about equal to or above 10 µm and about equal to or below 150 µm, for example. Likewise, a thickness of the second base electrode layer 21b at the central portion in the lamination direction T of the second base electrode layer 21b located at the second end surface E2 is preferably about equal to or above 10 µm and about equal to or below 150 µm, for example.

In the case where the first base electrode layer 21a and the second base electrode layer 21b are provided on the first principal surface M1, the second principal surface M2, the first side surface S1, and the second side surface S2, a thickness of the first base electrode layer 21a or the second base electrode layer 21b at the central portion in the length direction L of either the first base electrode layer 21a or the second base electrode layer 21b located on the first principal surface M1, the second principal surface M2, the first side surface S1, and the second side surface S2 is preferably about equal to or above 5 µm and about equal to or below 50 µm, for example.

In the case where the base electrode layers are formed into the thin film layers, the thin film layers can be formed in accordance with a thin film forming method such as a sputtering method and a vapor deposition method. The formed thin film layers are layers of deposited metal particles being equal to or below 1 µm.

### (Conductive resin layers)

The conductive resin layers are disposed on the base electrode layers. The conductive resin layers contain a resin component and a metal component. The conductive resin layers include the first conductive resin layer 22a and the second conductive resin layer 22b. The first conductive resin layer 22a and the second conductive resin layer 22b contain a thermosetting resin being the resin component. For this reason, the first conductive resin layer 22a and the second conductive resin layer 22b are more flexible than the base electrode layers are, because such a base electrode layer is formed from the plated film and a fired product containing the metal component and the glass component, for example.

Accordingly, even in the case where a deflective stress is applied to the mounting substrate and a physical impact is applied to the multilayer ceramic capacitor 1, or in the case where an impact attributed to a thermal cycle is applied to the multilayer ceramic capacitor 1, it is possible to suppress the occurrence of cracks in the multilayer ceramic capacitor 1. This is because the conductive resin layer functions as a cushioning layer.

Various publicly known thermosetting resins such as epoxy resin, phenol resin, urethane resin, silicone resin, and polyimide resin can be cited as specific examples of the thermosetting resin contained in the conductive resin layer. Among them, epoxy resin is one of the most appropriate resins, because epoxy resin is excellent in heat resistance, moisture resistance, adhesiveness, and the like.

The first conductive resin layer 22a is disposed on the first base electrode layer 21a. Here, the first conductive resin layer 22a is disposed in such a way as to cover the first base electrode layer 21a. Moreover, an end portion of the first conductive resin layer 22a is preferably in contact with the multilayer body 2. Likewise, the second conductive resin layer 22b is disposed on the second base electrode layer 21b. Here, the second conductive resin layer 22b is disposed in such a way as to cover the second base electrode layer 21b. Moreover, an end portion of the second conductive resin layer 22b is preferably in contact with the multilayer body 2.

The metal component contained in the first conductive resin layer 22a and the second conductive resin layer 22b can adopt Ag, Cu, Ni, Sn, Bi, or alloys containing those metals. The metal component is preferably formed into a shape of metal filler. In the case where the metal component is metal powder, it is also possible to use metal powder prepared by coating surface of the metal powder with Sn, Ni, or Cu. When the material prepared by coating the surface of the metal powder with Sn, Ni, or Cu is used, it is preferable to use Ag, Cu, Ni, Sn, Bi, or alloy powder thereof as the metal powder. It is especially preferable that the metal component contain Ag. Here, Ag may be single Ag metal, an alloy containing Ag, or metal powder having a surface coated with Ag.

In the case of using the metal powder having the surface coated with Ag, it is preferable to employ Cu, Ni, Sn, Bi, or alloy powder thereof as the metal powder. The following advantages are obtained when Ag is used as the metal filler. Among the metals, Ag has the lowest specific resistance. Accordingly, it is possible to form electrodes having low electric resistance. Since Ag is a noble metal, it is resistant to oxidation. Accordingly, it is possible to increase resistance of the conductive resin layers. As described above, the use of Ag as the metal filler makes it possible to form a parent material from an inexpensive metal while retaining the characteristics of Ag.

A shape of the metal filler included in the first conductive resin layer 22a and the second conductive resin layer 22b is not limited to a particular shape. The shape of the metal filler may be a spherical shape, a flat shape, and the like. The metal filler may be a mixture of spherical metal powder and flat metal powder.

An average grain diameter of the metal filler included in the first conductive resin layer 22a and the second conductive resin layer 22b is not limited to a particular diameter. The average grain diameter of the metal filler can be set equal to or above 0.3 µm and equal to or below 10 µm, for example. Here, the average grain diameter of the metal filler included in the conductive resin layers can be obtained by calculation in accordance with the laser diffraction particle size measurement method (based on ISO13320). This method of obtaining the average grain diameter is applicable regardless of the shape of the filler.

The metal filler included in the first conductive resin layer 22a and the second conductive resin layer 22b mainly takes on electric conductivity of the conductive resin layer. Specifically, a conduction path is formed inside the conductive resin layer by causing the metal filler particles to come into contact with one another.

As mentioned above, for example, various publicly known thermosetting resins such as epoxy resin, phenol resin, urethane resin, silicone resin, and polyimide resin can be cited as the resin contained in the first conductive resin layer 22a and the second conductive resin layer 22b. Among them, epoxy resin which is excellent in heat resistance, moisture resistance, adhesiveness, and the like is one of the most appropriate resins.

The first conductive resin layer 22a and the second conductive resin layer 22b preferably include a hardener together with the thermosetting resin. Various publicly known compounds including phenol-based, amine-based, acid anhydrate-based, imidazole-based, active ester-based, and amide-imide-based compounds and the like can be used as the hardener when epoxy resin is used as a base resin.

The metal included in the first conductive resin layer 22a is preferably contained in an amount equal to or above 35 vol% and equal to or below 75 vol% relative to the entire volume of the first conductive resin layer 22a. Likewise, the metal included in the second conductive resin layer 22b is preferably contained in an amount equal to or above 35 vol% and equal to or below 75 vol% relative to the entire volume of the second conductive resin layer 22b.

The resin included in the first conductive resin layer 22a is preferably contained in an amount equal to or above 25 vol% and equal to or below 65 vol% relative to the entire volume of the first conductive resin layer 22a. The resin included in the second conductive resin layer 22b is preferably contained in an amount equal to or above 25 vol% and equal to or below 65 vol% relative to the entire volume of the second conductive resin layer 22b.

Of the first conductive resin layer 22a or the second conductive resin layer 22b located at the first end surface E1 or the second end surface E2, a thickness of the first conductive resin layer 22a or the second conductive resin layer 22b located at the central portion in the lamination direction T is preferably about equal to or above 10 µm and about equal to or below 200 µm, for example.

In the case where the first conductive resin layer 22a and the second conductive resin layer 22b are also provided on the first principal surface M1 and the second principal surface M2 as well as the first side surface S1 and the second side surface S2, a thickness of the conductive resin layer at the central portion in the length direction L of the first conductive resin layer 22a or the second conductive resin layer 22b located on the first principal surface M1 and the second principal surface M2 as well as the first side surface S1 and the second side surface S2 is preferably about equal to or above 10 µm and about equal to or below 200 µm, for example.

### (Plated layers)

A description will be given of the plated layers. As mentioned above, the lower plated layers and the upper plated layers are included. That is to say, each plated layer includes two layers. However, the plated layer may be formed from one layer or multiple layers.

### (Lower plated layers)

The lower plated layers are disposed on the conductive resin layers. Each lower plated layer covers at least part of the conductive resin layer. The lower plated layers include the first lower plated layer 23a and the second lower plated layer 23b. The first lower plated layer 23a is disposed on the first conductive resin layer 22a. The second lower plated layer 23b is disposed on the second conductive resin layer 22b.

The first lower plated layer 23a and the second lower plated layer 23b can be formed from the Ni-plated layers. By forming the lower plated layers from the Ni-plated layers, it is possible to keep the base electrode layers and the like from being eroded by solder when the multilayer ceramic capacitor 1 is mounted.

### (Upper plated layers)

The upper plated layers are disposed on the lower plated layers. Each upper plated layer covers at least part of the lower plated layer. The upper plated layers include the first upper plated layer 24a and the second upper plated layer 24b. The first upper plated layer 24a is disposed on the first lower plated layer 23a. The second upper plated layer 24b is disposed on the second lower plated layer 23b.

The first upper plated layer 24a and the second upper plated layer 24b can be formed from the Sn-plated layers. The Sn-plated layers have good solder wettability. Accordingly, forming the upper plated layers from the Sn-plated layers facilitates mounting when the multilayer ceramic capacitor 1 is mounted on the substrate and the like.

Here, the metals serving as the materials of the lower plated layers and the upper plated layers are not limited to the aforementioned examples. The plated layers inclusive of the lower plated layers and the upper plated layers can contain at least one selected from the metals such as Cu, Ni, Ag, Pd, Au, and Sn as well as the alloys such as Ag-Pd alloy, for example.

Meanwhile, a thickness of each plated layer is preferably equal to or above 2 µm and equal to or below 15 µm.

The outer electrodes can also be formed only from the plated layers without providing the base electrode layers. A structure provided only with the plated layers without providing the base electrode layers will be described below.

Each of the first outer electrode 20a and the second outer electrode 20b is directly formed as the plated layers on the surface of the multilayer body 2. That is to say, the multilayer ceramic capacitor 1 may adopt a structure including the plated layers electrically connected to the first inner electrode layer 6a or the second inner electrode layer 6b. In the case where the outer electrode has the above-mentioned structure, the plated layers may be formed after disposing a catalyst on the surface of the multilayer body 2 as a pre-process.

The plated layers preferably include the lower plated electrode formed on the surface of the multilayer body 2, and the upper plated electrode formed on a surface of the lower plated electrode. In this case, each of the lower plated electrode and the upper plated electrode preferably includes at least one type of a metal selected from Cu, Ni, Sn, Pb, Au, Ag, Pd, Bi, Zn, and the like or an alloy containing any of these metals, for example.

The lower plated electrode is preferably formed by using Ni having a solder barrier property. The upper plated electrode is preferably formed by using Sn, Au, or the like having good solder wettability.

Meanwhile, in the case where the first inner electrode layer and the second inner electrode layer are formed by using Ni, for example, the lower plated electrode is preferably formed by using Cu having a good bonding property to Ni. Here, the upper plated electrode only needs to be formed as appropriate, and each of the first outer electrode 20a and the second outer electrode 20b may be made of the lower plated electrode.

The plated layers may adopt the upper plated electrode as the outermost layer. Alternatively, another plated electrode may further be formed on a surface of the upper plated electrode. In the case of disposing the plated layers without providing the base electrode layers, a thickness of each one of the plated layers is preferably equal to or above 1 µm and equal to or below 15 µm. In the meantime, the plated layers preferably do not include glass. A metal percentage per unit volume of the plated layers is preferably equal to or above 99% by volume.

Dimensions of the multilayer ceramic capacitor 1 are not limited to particular values. A dimension in the length direction L of the multilayer ceramic capacitor 1 inclusive of the multilayer body 2 and the outer electrodes will be referred to as an L dimension. The L dimension is preferably equal to or above 0.2 mm and equal to or below 10 mm. A dimension in the lamination direction T of the multilayer ceramic capacitor 1 inclusive of the multilayer body 2 and the outer electrodes will be referred to as a T dimension. The T dimension is preferably equal to or above 0.1 mm and equal to or below 0.5 mm. A dimension in the width direction of the multilayer ceramic capacitor 1 inclusive of the multilayer body 2 and the outer electrodes will be referred to as a W dimension. The W dimension is preferably equal to or above 0.1 mm and equal to or below 10 mm.

### (Manufacturing method of multilayer ceramic capacitor of first embodiment)

A method of manufacturing the multilayer ceramic capacitor 1 will be described.
(1) The dielectric sheets and conductive paste for the inner electrode layers are prepared. Binders and solvents are included in the dielectric sheets and the conductive paste for the inner electrode layers. Publicly known organic binders, organic solvents, and the like can be used as these binders and solvents.
(2) An inner electrode layer pattern is formed by printing predetermined patterns on the dielectric sheets with the conductive paste for the inner electrode layers. The printing can be carried out, for example, by screen printing, gravure printing, or the like.
(3) The predetermined number of the dielectric sheets for the outer layer portions are laminated. No inner electrode layer patterns are printed on the dielectric sheets for the outer layer portions. The dielectric sheets on which the inner electrode layer patterns are printed are sequentially laminated thereon. Moreover, a predetermined number of the dielectric sheets for the outer layer portions are laminated thereon. In this way, a multilayer sheet is manufactured.

The second dielectric layer 5b for reducing the difference in level will be described below. The dielectric paste constituting the second dielectric layer 5b will be referred to as level difference reduction paste.

The level difference reduction paste is applied to a surrounding region of the pattern for the inner electrode layer in the dielectric sheet provided with the inner electrode layer pattern by printing with the conductive paste for the inner electrode layer. That is to say, the level difference reduction paste is applied to a portion where the pattern for the inner electrode layer is not formed, because the level difference reduction paste is paste used for eliminating the difference in level between the pattern for the inner electrode layer and the surrounding region thereof. Meanwhile, the level difference reduction paste may also be applied in such a way as to partially overlap the surrounding region of the pattern for the inner electrode layer. An overlapping width in this case can be set to about 50 µm, for example. In the meantime, the level difference reduction paste can also be applied in such a way as to form a gap with the pattern for the inner electrode layer. A width of the gap in the case can be set to about 50 µm, for example.

Amounts of coverage over the inner electrode layer, namely, amounts of overlap in printing with the level difference reduction paste can be set to -30 µm in the length direction L and +20 µm in the width direction W, while a thickness can be set to about 50% of either the thickness of the pattern for the inner electrode layer or the thickness of Ni, for example.

Meanwhile, when the dielectric sheet is first printed with the level difference reduction paste and then printed with the inner electrode layer paste, amounts of coverage over the second dielectric layer 5b, namely, amounts of overlap can be set to -30 µm in the length direction L and +20 µm in the width direction W, while a thickness can be set to about 50% of either the thickness of the pattern for the inner electrode layer or the thickness of Ni, for example.

The level difference reduction paste may employ ceramic paste used for manufacturing the dielectric sheets, or may employ a different material. An added amount of Ni or the like to the level difference reduction paste is different from an added amount thereof to the ceramic paste used for manufacturing the dielectric sheets. The level difference reduction paste to be applied to the surrounding region along the length direction of the pattern for the inner electrode layer involves a large added amount of Ni or the like. On the other hand, the level difference reduction paste to be applied to the surrounding region along the width direction of the pattern for the inner electrode layer involves a small added amount of Ni or the like. Diffusion of Ni to the dielectric sheets occurs in the case of the large added amount of Ni to the level difference reduction paste. Addition of Ni can be carried out by adding Ni powder to the paste when the level difference reduction paste is prepared. Meanwhile, addition of Ni can also be carried out by increasing the added amount of Ni at the time of preparing a raw material, or can also be carried out, for example, by performing additional printing with Ni paste over the level difference reduction paste after printing on the dielectric sheets with the level difference reduction paste.

(4) A multilayer block is manufactured by pressing the multilayer sheets in the lamination direction. The pressing is carried out by means of isostatic pressing and the like.

(5) The multilayer block is cut into a predetermined size. Thus, a multilayer chip is cut out. In this instance, corner portions and ridge portions of the multilayer chip may be rounded. This rounding is carried out by barrel polishing and the like.

(6) The multilayer chip is fired. Thus, the multilayer body is manufactured. A firing temperature is preferably equal to or above 900°C up to 1200°C. The firing temperature can be changed depending on the materials of the dielectric body and the inner electrode layers. As described above, grain growth of the grains progresses as a consequence of sequentially carrying out lamination, high temperature degreasing, firing, and annealing. However, the grain growth of the grains on the side surface side of the inner layer portion 10 is suppressed due to a large solid solution amount of Ni.

Next, the multilayer body is provided with the outer electrodes.

(7) The conductive paste serving as the base electrodes is applied to both end surfaces of the multilayer body, thus forming the base electrode layers. In the present embodiment, the baked layers were formed as the base electrode layers. In the case of forming the baked layers, the conductive paste is applied to predetermined positions of the multilayer body. The conductive paste contains the glass component and the metal. Meanwhile, the application can be carried out in accordance with, for example, a method such as dipping. After the application, a baking process is carried out to form the base electrode layers. A temperature in the baking process in this instance is preferably equal to or above 700°C and equal to or below 900°C.

(8) The conductive resin layers are formed on the base electrode layers. As for a method of forming the conductive resin layers, the conductive resin paste containing the resin component and the metal component is prepared to begin with. This conductive resin paste is applied onto the base electrode layers. This application can be carried out in accordance with the dipping method. After the application, a thermal process is carried out at a temperature equal to or above 200°C and equal to or below 550°C. The resin is thermally cured by this thermal process. Thus, the conductive resin layers are formed. An atmosphere at the time of the thermal process is preferably a nitrogen gas atmosphere. Meanwhile, an oxygen concentration is preferably kept equal to or below 100 ppm in order to prevent the resin from scattering and to prevent the various metal components from oxidation.

(9) After the formation of the conductive resin layers, the Ni-plated layers are formed as the first lower plated layer and the second lower plated layer on the surfaces of the conductive resin layers. An electrolytic plating method can be used as a method of forming the first Ni-plated layer and the second Ni-plated layer. Meanwhile, barrel plating is preferably used as the plating method.

(10) In the present embodiment, the Sn-plated layers were further formed on the Ni-plated layers. That is to say, the first Sn-plated layer was formed on the first Ni-plated layer and the second Sn-plated layer was formed on the second Ni-plated layer. In this way, it is possible to improve wettability of solder used for mounting when the multilayer ceramic capacitor 1 is mounted on the substrate and the like. Thus, the multilayer ceramic capacitor 1 can easily be mounted on the substrate and the like. The electrolytic plating method can be used as a method of forming the Sn-plated layers. Meanwhile, barrel plating is preferably used as the plating method.

As described above, in the present embodiment, the concentration of the additive agent at the end portion on the side surface side of the inner layer portion 10 is set higher than the concentration of the additive agent at the central portion of the inner layer portion 10 by using the material with the large added amount of Ni for the level difference reduction paste.

### (Modifications)

Nevertheless, the method of setting the concentration of the additive agent at the end portion on the side surface side of the inner layer portion 10 higher than the concentration of the additive agent at the central portion of the inner layer portion 10 is not limited to the method using the level difference reduction paste. It is also possible to set the concentration of the additive agent at the end portion on the side surface side of the inner layer portion 10 higher than the concentration of the additive agent at the central portion of the inner layer portion 10 even in the case of not using the level difference reduction paste. Here, the case of not using the level difference reduction paste corresponds to the case of not providing the second dielectric layers 5b.

In the case of not providing the second dielectric layers 5b, it is possible to adopt a method of applying the additive agent or a material containing the additive agent to a region of the dielectric sheet printed with the level difference reduction paste, for example. The concentration of the additive agent at the end portion on the side surface side of the inner layer portion 10 can be set higher than the concentration of the additive agent at the central portion of the inner layer portion 10 by applying the additive agent or the material containing the additive agent to the region surrounding the pattern for the inner electrode layer in the dielectric sheet.

Meanwhile, the present invention is not limited to the configuration to provide the second dielectric layers 5b both in the vicinity of the end surface and in the vicinity of the side surface. The second dielectric layer 5b can be provided either in the vicinity of the end surface or in the vicinity of the side surface. In this case, regarding the portion not provided with the second dielectric layer 5b, the additive agent or the material containing the additive agent is applied to the corresponding portion of the dielectric sheet. In this way, the concentration of the additive agent at the end portion on the side surface side of the inner layer portion 10 can be set higher than the concentration of the additive agent at the central portion of the inner layer portion 10.

### (Second embodiment)

A second embodiment of the multilayer ceramic capacitor 1 will be described. In the following description, different features from those of the first embodiment will be mainly discussed. The multilayer ceramic capacitor 1 of the second embodiment is different from the multilayer ceramic capacitor 1 of the first embodiment in that the side surface side outer layer portions are formed from dielectric sheets for the side surface side outer layer portions. In order to distinguish from the side surface side outer layer portions of the first embodiment, the first side surface side outer layer portion WG1 will be referred to as a first side surface side outer layer portion 30a, and the second side surface side outer layer portion WG2 will be referred to as a second side surface side outer layer portion 30b in the second embodiment.

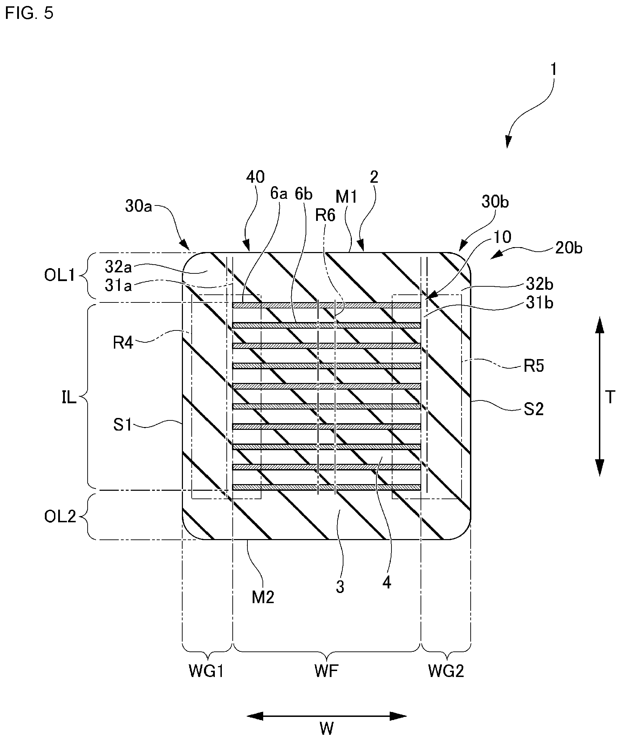

Fig. 5 is a view in the second embodiment corresponding to the sectional view taken along line II-II in Fig. 1. As shown in Fig. 5, the multilayer body 2 includes a multilayer body core portion 40, the first side surface side outer layer portion 30a, and the second side surface side outer layer portion 30b. The multilayer body core portion 40 is a portion corresponding to the W opposition portion WF in the multilayer body 2. The first side surface side outer layer portion 30a and the second side surface side outer layer portion 30b are provided in such a way as to sandwich the multilayer body core portion 40 in the width direction W.

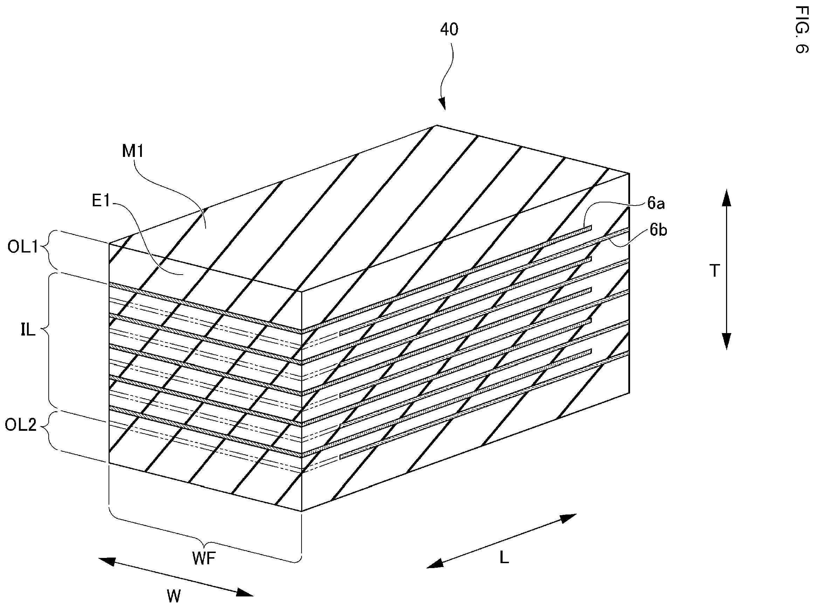

Fig. 6 is a diagram showing an outline of the multilayer body core portion 40. The first inner electrode layer 6a and the second inner electrode layer 6b are exposed from two end surfaces in the width direction W of the multilayer body core portion 40.

The first side surface side outer layer portion 30a and the second side surface side outer layer portion 30b are formed from multiple dielectric layers for the side surface side outer layer portions. Specifically, as shown in Fig. 5, the first side surface side outer layer portion 30a includes a first outer side layer 32a located on the first side surface S1 side and a first inner side layer 31a located on the multilayer body core portion 40 side. Meanwhile, the second side surface side outer layer portion 30b includes a second outer side layer 32b located on the second side surface S2 side and a second inner side layer 31b located on the multilayer body core portion 40 side.

Due to a difference in sinterability between the first outer side layer 32a and the first inner side layer 31a, there is a case where a state of being a two-layered structure and an interface between the layers can be confirmed by observation using an optical microscope in a dark field of view. Meanwhile, due to a difference in sinterability between the second outer side layer 32b and the second inner side layer 31b, there is a case where a state of being a two-layered structure and an interface between the layers can be confirmed by observation using an optical microscope in a dark field of view.

Note that there is a case where the state of being the two-layered structure and the interface between the layers cannot be confirmed even by observation using the optical microscope in the dark field of view. In this case, a region equivalent to 80% on the outer side of the first side surface side outer layer portion 30a will be defined as the first outer side layer 32a and the portion other than the first outer side layer 32a will be defined as the first inner side layer 31a. In the meantime, a region equivalent to 80% on the outer side of the second side surface side outer layer portion 30b will be defined as the second outer side layer 32b and the portion other than the second outer side layer 32b will be defined as the second inner side layer 31b.

The side surface side outer layer portions can be formed from, for example, a dielectric material having a perovskite structure and being made of BaTiO₃ or the like as a main component. Meanwhile, a ratio of the mol number of Si to the mol number of Ti in the side surface side outer layer portions is preferably equal to or above 1.0 and equal to or below 7.0.

A dimension in the width direction W of each side surface side outer layer portion is preferably equal to or above 5 µm and equal to or below 40 µm.

An inner side layer of the side surface side outer layer portion includes the additive agent at a higher concentration than that of an outer side layer thereof. Meanwhile, the content of Si in the outer side layer of the side surface side outer layer portion is preferably larger than the content of Si in the inner side layer thereof. In the meantime, the content of Ni in the outer side layer of the side surface side outer layer portion is preferably smaller than the content of Ni in the inner side layer thereof.

In the present embodiment, variations of positions at the end portions of the inner electrode layers are small on the first side surface S1 side and the second side surface S2 side of the inner layer portion 10. For example, regarding positions in the width direction W of the end portions on the first side surface S1 side of the first inner electrode layer 6a and the second inner electrode layer 6b, a difference between a position closest to the first side surface S1 and a position of the end portion of the inner electrode layer farthest from the first side surface S1 is equal to or below 5 µm. Likewise, a difference between a distance closest to the second side surface S2 and a distance farthest from the second side surface S2 is equal to or below 5 µm.

### (Manufacturing method of multilayer ceramic capacitor of second embodiment)

A method of manufacturing the multilayer ceramic capacitor 1 of the second embodiment will be described while mainly focusing on different features from those of the manufacturing method of the first embodiment.

The same methods as (1) to (4) in the manufacturing method of the first embodiment can be employed.

(5) In cutting the multilayer block, the multilayer block is cut such that the conductive paste corresponding to the inner electrode layers is exposed to both sides in the width direction W. Moreover, prior to lamination, printing is performed on the dielectric sheets with the conductive paste for the inner electrode layers so as to form such patterns that enable the aforementioned cutting.

(6) The dielectric sheets for the side surface side outer layer portions are manufactured. Specifically, a perovskite compound containing Ba and Ti is prepared as the dielectric material. At least one of Si, Ni, V, Sn, Mn, Mg, and Ba is added as the additive agent to dielectric powder obtained from this dielectric material. Meanwhile, a binder resin, an organic solvent, a plasticizer, and a dispersant are mixed at predetermined proportions with the dielectric powder. In this way, a ceramic slurry is manufactured.

An optimum solvent is selected as appropriate as a solvent included in the ceramic slurry that constitutes the inner side layer of the side surface side outer layer portion in order to prevent dissolution into a dielectric sheet for the outer side layer. Meanwhile, this dielectric sheet for the inner side layer has a function for attachment to the multilayer chip.

The content of the additive agent such as Ni contained in the inner side layer is preferably larger than the content of the additive agent such as Ni contained in the outer side layer.

(7) The manufactured ceramic slurry constituting the outer side layer is applied to and dried on a surface of the resin film. Thus, a dielectric sheet for the outer side layer is obtained.

(8) The manufactured ceramic slurry constituting the inner side layer is applied to and dried on a surface of the dielectric sheet for the outer side layer. Thus, a dielectric sheet for the inner layer portion is formed. In this way, the dielectric sheets for the side surface side outer layer portion having a two-layered structure are obtained.

(9) The description has been given of the method of obtaining the dielectric sheets for the side surface side outer layer portion having the two-layered structure by applying the dielectric sheet for the inner layer portion onto the surface of the dielectric sheet for the outer side layer and drying the dielectric sheets. However, the dielectric sheets can also be formed in accordance with a method other than the aforementioned forming method. For example, each of the dielectric sheet for the outer side layer and the dielectric sheet for the inner layer portion is formed in advance. Thereafter, the dielectric sheets for the side surface side outer layer portion having the two-layered structure may be obtained by attaching the respective sheets to each other. Here, the dielectric sheets for the side surface side outer layer portion are not limited to the two layers, but may also include multiple layers equal to or above three layers.

(10) Next, the dielectric sheets for the side surface side outer layer portion are peeled off the resin film such as a PET film. Thereafter, the dielectric sheet for the inner side layer in the dielectric sheets for the side surface side outer layer portion thus peeled off is pressed against the multilayer chip. In this instance, the dielectric sheet is pressed against one side in the width direction W of the multilayer chip. Then, the layer constituting the side surface side outer layer portion is formed by stamping. Next, the dielectric sheet for the inner layer portion is opposed to and pressed against the other side of the multilayer chip not provided with the layer constituting the side surface side outer layer portion. Then, the layer constituting the side surface side outer layer portion is formed by stamping. In this instance, it is preferable to apply an organic solvent serving as an adhesive to the side surfaces of the multilayer chip in advance.

(11) The multilayer chip provided with the layers constituting the side surface side outer layer portions is subjected to a degreasing process under prescribed conditions in a nitrogen atmosphere. Thereafter, the multilayer chip is fired at a predetermined temperature in a mixed atmosphere of nitrogen, hydrogen, and water vapor, thereby obtaining a sintered multilayer body.

(12) The outer electrode is formed at each of the two end surfaces of the sintered multilayer body. The multilayer ceramic capacitor 1 is manufactured as described above.

Here, in the second embodiment, the second dielectric layer 5b for the level difference reduction may be disposed in the vicinity of the end surface of the multilayer body as with the first embodiment. Meanwhile, the material constituting the second dielectric layer 5b can contain the additive agent in a small amount or contain no additive agent as with the first embodiment.

Alternatively, in the second embodiment, it is possible not to dispose the second dielectric layer 5b in the vicinity of the end surface of the multilayer body. In this case, the concentration of the additive agent at the end portion on the end surface side of the inner layer portion 10 can be set equal to the concentration of the additive agent at the central portion of the inner layer portion 10.

In the second embodiment as well, the concentration of the additive agent at the end portion on the side surface side of the inner layer portion 10 can be set higher than the concentration of the additive agent at the central portion of the inner layer portion 10 as with the first embodiment, because the additive agent included in the side surface side outer layer portion, or the additive agent included in the first inner side layer 31a and the second inner side layer 31b in particular is diffused to the dielectric layers of the inner layer portion 10.

### (Measurement method)

A method of measuring the ceramic grain diameter will be described.

### (WT plane)

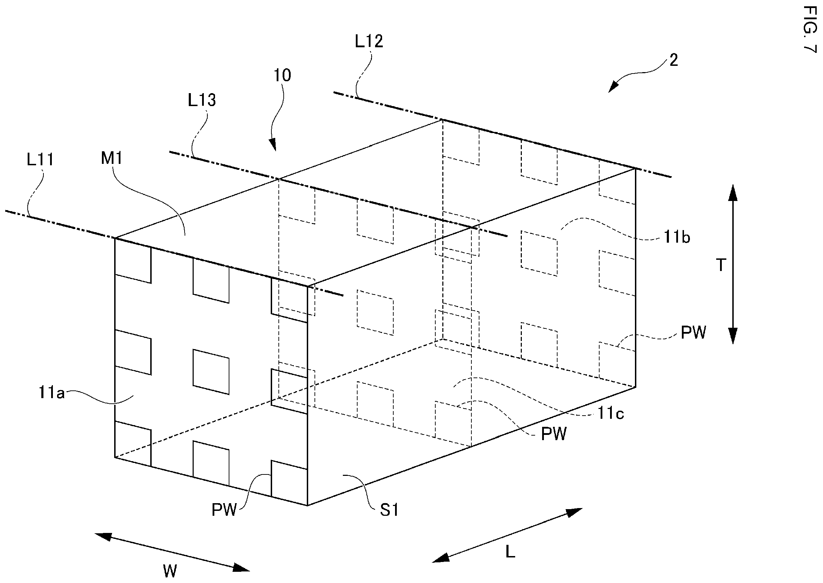

Measurement on a WT plane will be described based on Fig. 7. Fig. 7 is a perspective view showing a polished inner layer portion 10. Polishing of the inner layer portion 10 will be described to begin with.

The polishing of the multilayer body 2 is carried out from the first end surface E1, and the polishing is conducted until reaching a position at 80 µm from the end portion in the length direction L of the inner layer portion 10. This position is indicated with a line L11. The WT cross-section on the line L11 will be referred to as a first cross-section 11a.

Likewise, the polishing of the multilayer body 2 is carried out from the second end surface E2, and the polishing is conducted until reaching a position at 80 µm from the end portion in the length direction L of the inner layer portion 10. This position is indicated with a line L12. The WT cross-section on the line L12 will be referred to as a second cross-section 11b.

Measurement sites in the width direction W are equivalent to 30 µm in one direction of the width direction W from a central position in the width direction W of the inner layer portion 10 and 30 µm in the other direction thereof, that is to say, equivalent to a width of 80 µm in the width direction W with respect to the central position as the center, and widths of 80 µm from the respective end portions in the width direction W of the inner layer portion 10. The width of 80 µm in the width direction W with respect to the central position in the width direction W of the inner layer portion 10 will be defined as the central portion in the width direction W.

Measurement sites in the lamination direction T are equivalent to 30 µm in one direction of the lamination direction T from a central position in the lamination direction T of the inner layer portion 10 and 30 µm in the other direction thereof, that is to say, equivalent to a width of 80 µm in the lamination direction T with respect to the central position as the center, and widths of 80 µm from the respective end portions in the lamination direction T of the inner layer portion 10. The width of 80 µm in the lamination direction T with respect to the central position in the lamination direction T of the inner layer portion 10 will be defined as the central portion in the lamination direction T.

The inner layer portion 10 is further polished starting from the first cross-section 11a or the second cross-section 11b. The polishing is conducted until reaching a position equivalent to 1/2 of the length in the length direction L of the inner layer portion 10. This position will be indicated with a line L13. The WT cross-section on the line L13 will be referred to as a third cross-section 11c.

Similar sites to those on the first cross-section 11a and on the second cross-section 11b will be determined as measurement sites on the third cross-section 11c as well.

The measurement sites determined as described above will be indicated as measurement sites PW. Nine measurement sites PW are deployed on each of the first cross-section 11a, the second cross-section 11b, and the third cross-section 11c, and twenty-seven measurement sites PW are deployed in total.

A size of a range to be measured at each measurement site is equivalent to 80 µm both in the width direction W and in the lamination direction T. That is to say, a length of each side of a square box indicated at each measurement site PW is equal to 80 µm.

### (LT plane)

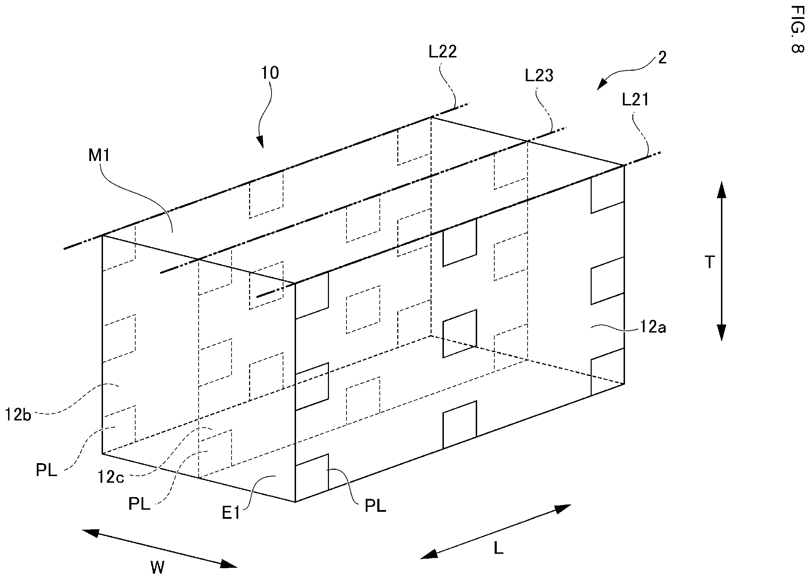

Measurement on an LT plane will be described based on Fig. 8. Fig. 8 is a perspective view showing the polished inner layer portion 10. Measurement sites are determined in terms of the LT plane in the same way as the above-described procedures for the WT plane.

The polishing of the multilayer body 2 is carried out from the first side surface S1, and the polishing is conducted until reaching a position at 80 µm from the end portion in the width direction W of the inner layer portion 10. This position is indicated with a line L21. The LT cross-section on the line L21 will be referred to as a fourth cross-section 12a.

Likewise, the polishing of the multilayer body 2 is carried out from the second side surface S2, and the polishing is conducted until reaching a position at 80 µm from the end portion in the width direction W of the inner layer portion 10. This position is indicated with a line L22. The LT cross-section on the line L22 will be referred to as a fifth cross-section 12b.

Measurement sites in the length direction L are equivalent to a width of 80 µm at the central portion in the length direction L of the inner layer portion 10, and widths of 80 µm from the respective end portions in the length direction L of the inner layer portion 10.

Measurement sites in the lamination direction T are equivalent to a width of 80 µm at the central portion in the lamination direction T of the inner layer portion 10, and widths of 80 µm from the respective end portions in the lamination direction T of the inner layer portion 10.

The inner layer portion 10 is further polished starting from the fourth cross-section 12a or the fifth cross-section 12b. The polishing is conducted until reaching a position equivalent to 1/2 of the length in the width direction W of the inner layer portion 10. This position will be indicated with a line L23. The LT cross-section on the line L23 will be referred to as a sixth cross-section 12c.

Similar sites to those on the fourth cross-section 12a and the fifth cross-section 12b are deployed for measurement on the sixth cross-section 12c as well.

The measurement sites determined as described above will be indicated as measurement sites PL. Nine measurement sites PL are set up on each of the fourth cross-section 12a, the fifth cross-section 12b, and the sixth cross-section 12c, and twenty-seven measurement sites PL are set up in total.

A size of a range to be measured in each measurement site indicated with the measurement site PL is the same as that of the measurement site PW. That is to say, the range to be measured is equivalent to 80 µm both in the length direction L and in the lamination direction T. That is to say, a length of each side of a square box indicated at each measurement site PL is equal to 80 µm.

A description has been given above of the WT plane and the LT plane. However, measurement can also be carried out on a LW plane in a similar manner.

Meanwhile, the measurement can be configured in such a way as to perform the measurement on the WT plane as described above on fifteen pieces of the multilayer bodies 2 in one lot manufactured under the same conditions, and to perform the measurement on the LT plane as described above on the fifteen pieces of the multilayer bodies 2 in one lot manufactured under the same conditions, for example.

The measurement of the concentrations of the additive agent and of the ceramic grain diameters carried out at the aforementioned measurement sites has confirmed that the concentration of the additive agent at the end portion on the side surface side of the inner layer portion 10 was higher than the concentration of the additive agent at the central portion of the inner layer portion 10 as described above. Moreover, the measurement has also confirmed that the ceramic grain diameter at the end portion on the side surface side of the inner layer portion 10 was smaller than the ceramic grain diameter at the central portion of the inner layer portion 10.

Meanwhile, the measurement has confirmed that the concentration of the additive agent at the end portion on the end surface side of the inner layer portion 10 was equal to or lower than the concentration of the additive agent at the central portion of the inner layer portion 10. Moreover, the measurement has also confirmed that the ceramic grain diameter at the end portion on the end surface side of the inner layer portion 10 was equal to or larger than the ceramic grain diameter at the central portion of the inner layer portion 10.

The measurement of the ceramic grain diameter is carried out as described below. A cross-section in a range of 80 µm × 80 µm at the aforementioned measurement side, that is to say, at a predetermined position is observed with an electron microscope. Grain diameters of the ceramic grains found by the observation are averaged. The averaged grain diameter is defined as the ceramic grain diameter.

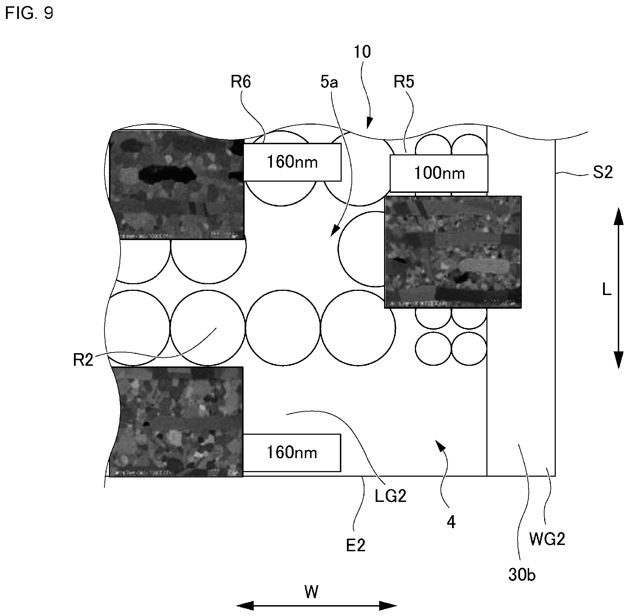

An example of a measurement result will be described based on Fig. 9. Fig. 9 is a diagram corresponding to an LW sectional view of the multilayer body showing ceramic grain diameter distribution.

Fig. 9 shows the multilayer ceramic capacitor 1 of the second embodiment. In the meantime, Fig. 9 shows portions in the vicinity of the second end surface E2 and the second side surface S2 of the multilayer ceramic capacitor 1. Note that the multilayer ceramic capacitor 1 shown in Fig. 9 is not provided with the second dielectric layers 5b.

The second dielectric layers 5b are not provided in the example shown in Fig. 9. Accordingly, the grain diameter in the region R2 is equivalent to the grain diameter in the region R6 because there is no diffusion of the additive agent from the second dielectric layer 5b.

Specifically, the grain diameter in the region on an outer side of the inner layer portion 10 is equal to about 160 nm in the second end surface side outer layer portion LG2. This is equivalent to the grain diameter in the region R6, because the second dielectric layers 5b are not provided in the example shown in Fig. 9 and the concentrations of the additive agent are not different between the inner layer portion 10 and the second end surface side outer layer portion LG2.

On the other hand, the grain diameter in the region R5 is smaller than that in the region R6, because of diffusion of the additive agent included in the second side surface side outer layer portion 30b.

The multilayer ceramic capacitor 1 of the present invention optimizes the content of the additive agent at the end portion of the inner layer portion 10 and the ceramic grain diameter at the end portion of the inner layer portion 10. Accordingly, insulation resistance at the end portion of the inner layer portion 10 is increased as compared to the structure of a multilayer ceramic capacitor 1 in the related art which uses a ceramic paste layer for level difference reduction without adjustment of the concentration of the additive agent. As a consequence, it is possible to provide the multilayer ceramic capacitor 1 having high reliability. Moreover, by changing the ceramic grain diameter at the end portion of the inner layer portion 10, it is possible to improve reliability of the multilayer ceramic capacitor 1.

Reasons why the insulation resistance is increased by optimizing the concentration of the additive agent and the ceramic grain diameter are as follows. By adding Ni as the additive agent, for example, it is possible to keep the ceramic grain diameter in the dielectric layer small when the multilayer chip is fired. Accordingly, the number of ceramic grains in the dielectric layer can be increased. The application voltage per grain boundary can be reduced by increasing the number of the ceramic grains in the dielectric layer. As a consequence, it is possible to suppress the occurrence of the dielectric degradation and dielectric breakdown at the end portion which is prone to electric field concentration.

In the multilayer ceramic capacitor 1 according to the present embodiment, the concentration of the additive agent on the side surface side of the inner layer portion 10 is higher than the concentration of the additive agent at the central portion of the inner layer portion 10. Moreover, the grain diameter of the ceramic contained in the end portion of the inner layer portion 10 is smaller than the grain diameter of the ceramic contained in the central portion of the inner layer portion 10. For this reason, the occurrence of the dielectric degradation and dielectric breakdown at the end portion of the inner layer portion 10 can be suppressed more properly.

Although the embodiments of the present invention have been described above, the present invention is not limited to the above-described embodiments and various changes and modifications are possible.

<1> A multilayer ceramic electronic component including:
   a multilayer body including a plurality of dielectric layers and a plurality of inner electrode layers being laminated, a first principal surface and a second principal surface opposed to each other in a lamination direction, a first end surface and a second end surface opposed to each other in a length direction intersecting the lamination direction, and a first side surface and a second side surface opposed to each other in a width direction intersecting the lamination direction and the length direction, in which
   the plurality of inner electrode layers include a first inner electrode layer exposed from the first end surface, and a second inner electrode layer exposed from the second end surface,
   the multilayer body includes an inner layer portion in which the first inner electrode layer is opposed to the second inner electrode layer in the lamination direction,
   a grain diameter of a ceramic contained in a first side surface side and a second side surface side of the multilayer body is smaller than a grain diameter of the ceramic contained in a central portion in the width direction of the multilayer body, and
   a grain diameter of the ceramic contained in end portions on a first end surface side and a second end surface side of the inner layer portion is equal to or larger than a grain diameter of the ceramic contained in a central portion of the inner layer portion.
<2> The multilayer ceramic electronic component according to <1>, in which
   the plurality of dielectric layers include a first dielectric layer disposed between the first inner electrode layer and the second inner electrode layer opposed in the lamination direction, and a second dielectric layer disposed on the inner layer portion,
   a grain diameter of the ceramic contained in the first side surface side and the second side surface side of the first dielectric layer is smaller than the grain diameter of the ceramic contained in the central portion in the width direction of the multilayer body, and
   a grain diameter of the ceramic contained in the second dielectric layer disposed on the first side surface side and the second side surface side is smaller than the grain diameter of the ceramic contained in the central portion in the width direction of the multilayer body.
<3> A multilayer ceramic electronic component including:
   a multilayer body including a plurality of dielectric layers and a plurality of inner electrode layers being laminated, a first principal surface and a second principal surface opposed to each other in a lamination direction, a first end surface and a second end surface opposed to each other in a length direction intersecting the lamination direction, and a first side surface and a second side surface opposed to each other in a width direction intersecting the lamination direction and the length direction, in which
   the plurality of inner electrode layers include a first inner electrode layer exposed from the first end surface, and a second inner electrode layer exposed from the second end surface,
   the multilayer body includes an inner layer portion in which the first inner electrode layer is opposed to the second inner electrode layer in the lamination direction,
   a concentration of an additive agent contained in a first side surface side and a second side surface side of the multilayer body is higher than a concentration of the additive agent contained in a central portion in the width direction of the multilayer body, and
   a concentration of the additive agent contained in end portions on a first end surface side and a second end surface side of the inner layer portion is equal to or lower than a concentration of the additive agent contained in a central portion of the inner layer portion.
<4> The multilayer ceramic electronic component according to <3>, in which the additive agent includes at least one of Ni, V, Sn, Mn, and Mg.
<5> The multilayer ceramic electronic component according to any one of <1> to <4>, in which
   a grain diameter of the ceramic contained in the first side surface side and the second side surface side of the multilayer body is smaller than a grain diameter of the ceramic contained in the central portion in the width direction of the multilayer body by a percentage equal to or above 10% and equal to or below 40%, and
   a grain diameter of the ceramic contained in the end portions on the first end surface side and the second end surface side of the inner layer portion is larger than a grain diameter of the ceramic contained in the central portion of the inner layer portion by a percentage equal to or above 10% and equal to or below 40%.
<6> The multilayer ceramic electronic component according to <3> or <4>, in which
   the concentration of the additive agent contained in the first side surface side and the second side surface side of the multilayer body has a ratio equal to or above 100.1 mol% and equal to or below 103.0 mol% relative to the concentration of the additive agent contained in the central portion in the width direction of the multilayer body, and
   the concentration of the additive agent contained in the end portions on the first end surface side and the second end surface side of the inner layer portion has a ratio equal to or below 100 mol% and equal to or above 97.0 mol% relative to the concentration of the additive agent contained in the central portion of the inner layer portion.
<7> The multilayer ceramic electronic component according to any one of <3>, <4>, and <6>, in which
   a range where the concentration of the additive agent is high is a range from equal to or above 0 µm to equal to or below 80 µm from an end portion on the first side surface side of the inner layer portion to the central portion in the width direction, and
   the range where the concentration of the additive agent is high is a range from equal to or above 0 µm to equal to or below 80 µm from an end portion on the second side surface side of the inner layer portion to the central portion in the width direction.
<8> The multilayer ceramic electronic component according to any one of <1> to <7>, in which
   the multilayer body includes an outer layer portion formed from a dielectric material,
   the outer layer portion includes
      a first principal surface side outer layer portion disposed between a first principal surface side surface of the inner layer portion and the first principal surface,
      a second principal surface side outer layer portion disposed between a second principal surface side surface of the inner layer portion and the second principal surface,
      a first side surface side outer layer portion disposed between a first side surface side surface of the inner layer portion and the first side surface,
      a second side surface side outer layer portion disposed between a second side surface side surface of the inner layer portion and the second side surface,
      a first end surface side outer layer portion disposed between a first end surface side surface of the inner layer portion and the first end surface, and
      a second end surface side outer layer portion disposed between a second end surface side surface of the inner layer portion and the second end surface,
   each side surface side outer layer portion includes an inner side layer disposed on the inner layer portion side, and an outer side layer disposed on the first side surface side or the second side surface side relative to the inner side layer,
   an Si content of the outer side layer is larger than an Si content of the inner side layer, and
   a content of the additive agent being at least one of Ni, V, Sn, Mn, and Mg contained in the outer side layer is smaller than a content of the additive agent contained in the inner side layer.
<9> The multilayer ceramic electronic component according to <8>, in which a ratio of a mol number of Si to a mol number of Ti in the side surface side outer layer portion is equal to or above 1.0 and equal to or below 7.0.
<10> The multilayer ceramic electronic component according to <8> or <9>, in which a dimension along the width direction of the side surface side outer layer portion is equal to or above 5 µm and equal to or below 40 µm.

### Reference Signs List

- 1: multilayer ceramic capacitor (multilayer ceramic electronic component)
- 2: multilayer body
- 3: outer layer dielectric layer
- 4: inner layer dielectric layer
- 6a: first inner electrode layer
- 6b: second inner electrode layer
- 10: inner layer portion
- 40: multilayer body core portion
- IL: inner layer range
- OL1: first principal surface side outer layer portion
- OL2: second principal surface side outer layer portion
- LF: L opposition portion
- LG1: first end surface side outer layer portion
- LG2: second end surface side outer layer portion
- WF: W opposition portion
- WG1: first side surface side outer layer portion
- WG2: second side surface side outer layer portion
- E1: first end surface
- E2: second end surface
- S1: first side surface
- S2: second side surface
- T: lamination direction
- W: width direction

## Claims

1. A multilayer ceramic electronic component comprising:
a multilayer body including a plurality of dielectric layers and a plurality of inner electrode layers being laminated, a first principal surface and a second principal surface opposed to each other in a lamination direction, a first end surface and a second end surface opposed to each other in a length direction intersecting the lamination direction, and a first side surface and a second side surface opposed to each other in a width direction intersecting the lamination direction and the length direction, wherein
the plurality of inner electrode layers include a first inner electrode layer exposed from the first end surface, and a second inner electrode layer exposed from the second end surface,
the multilayer body includes an inner layer portion in which the first inner electrode layer is opposed to the second inner electrode layer in the lamination direction,
a grain diameter of a ceramic contained in a first side surface side and a second side surface side of the multilayer body is smaller than a grain diameter of the ceramic contained in a central portion in the width direction of the multilayer body, and
a grain diameter of the ceramic contained in end portions on a first end surface side and a second end surface side of the inner layer portion is equal to or larger than a grain diameter of the ceramic contained in a central portion of the inner layer portion.

2. The multilayer ceramic electronic component according to claim 1, wherein
the plurality of dielectric layers include a first dielectric layer disposed between the first inner electrode layer and the second inner electrode layer opposed in the lamination direction, and a second dielectric layer disposed on the inner layer portion,
a grain diameter of the ceramic contained in the first side surface side and the second side surface side of the first dielectric layer is smaller than the grain diameter of the ceramic contained in the central portion in the width direction of the multilayer body, and
a grain diameter of the ceramic contained in the second dielectric layer disposed on the first side surface side and the second side surface side is smaller than the grain diameter of the ceramic contained in the central portion in the width direction of the multilayer body.

3. A multilayer ceramic electronic component comprising:
a multilayer body including a plurality of dielectric layers and a plurality of inner electrode layers being laminated, a first principal surface and a second principal surface opposed to each other in a lamination direction, a first end surface and a second end surface opposed to each other in a length direction intersecting the lamination direction, and a first side surface and a second side surface opposed to each other in a width direction intersecting the lamination direction and the length direction, wherein
the plurality of inner electrode layers include a first inner electrode layer exposed from the first end surface, and a second inner electrode layer exposed from the second end surface,
the multilayer body includes an inner layer portion in which the first inner electrode layer is opposed to the second inner electrode layer in the lamination direction,
a concentration of an additive agent contained in a first side surface side and a second side surface side of the multilayer body is higher than a concentration of the additive agent contained in a central portion in the width direction of the multilayer body, and
a concentration of the additive agent contained in end portions on a first end surface side and a second end surface side of the inner layer portion is equal to or lower than a concentration of the additive agent contained in a central portion of the inner layer portion.

4. The multilayer ceramic electronic component according to claim 3, wherein the additive agent includes at least one of Ni, V, Sn, Mn, and Mg.

5. The multilayer ceramic electronic component according to any one of claims 1 to 4, wherein
a grain diameter of the ceramic contained in the first side surface side and the second side surface side of the multilayer body is smaller than a grain diameter of the ceramic contained in the central portion in the width direction of the multilayer body by a percentage equal to or above 10% and equal to or below 40%, and
a grain diameter of the ceramic contained in the end portions on the first end surface side and the second end surface side of the inner layer portion is larger than a grain diameter of the ceramic contained in the central portion of the inner layer portion by a percentage equal to or above 10% and equal to or below 40%.

6. The multilayer ceramic electronic component according to claim 3 or 4, wherein
the concentration of the additive agent contained in the first side surface side and the second side surface side of the multilayer body has a ratio equal to or above 100.1 mol% and equal to or below 103.0 mol% relative to the concentration of the additive agent contained in the central portion in the width direction of the multilayer body, and
the concentration of the additive agent contained in the end portions on the first end surface side and the second end surface side of the inner layer portion has a ratio equal to or below 100 mol% and equal to or above 97.0 mol% relative to the concentration of the additive agent contained in the central portion of the inner layer portion.

7. The multilayer ceramic electronic component according to any one of claims 3, 4, and 6, wherein
a range where the concentration of the additive agent is high is a range from equal to or above 0 µm to equal to or below 80 µm from an end portion on the first side surface side of the inner layer portion to the central portion in the width direction, and
the range where the concentration of the additive agent is high is a range from equal to or above 0 µm to equal to or below 80 µm from an end portion on the second side surface side of the inner layer portion to the central portion in the width direction.

8. The multilayer ceramic electronic component according to any one of claims 1 to 7, wherein
the multilayer body includes an outer layer portion formed from a dielectric material,
the outer layer portion includes
a first principal surface side outer layer portion disposed between a first principal surface side surface of the inner layer portion and the first principal surface,
a second principal surface side outer layer portion disposed between a second principal surface side surface of the inner layer portion and the second principal surface,
a first side surface side outer layer portion disposed between a first side surface side surface of the inner layer portion and the first side surface,
a second side surface side outer layer portion disposed between a second side surface side surface of the inner layer portion and the second side surface,
a first end surface side outer layer portion disposed between a first end surface side surface of the inner layer portion and the first end surface, and
a second end surface side outer layer portion disposed between a second end surface side surface of the inner layer portion and the second end surface,
each side surface side outer layer portion includes an inner side layer disposed on the inner layer portion side, and an outer side layer disposed on the first side surface side or the second side surface side relative to the inner side layer,
an Si content of the outer side layer is larger than an Si content of the inner side layer, and
a content of the additive agent being at least one of Ni, V, Sn, Mn, and Mg contained in the outer side layer is smaller than a content of the additive agent contained in the inner side layer.

9. The multilayer ceramic electronic component according to claim 8, wherein a ratio of a mol number of Si to a mol number of Ti in the side surface side outer layer portion is equal to or above 1.0 and equal to or below 7.0.

10. The multilayer ceramic electronic component according to claim 8 or 9, wherein a dimension along the width direction of the side surface side outer layer portion is equal to or above 5 µm and equal to or below 40 µm.
